(19) Europäisches Patentamt
European Patent Office
Office européen des brevets

(11) **EP 3 139 140 A1**

(12) **EUROPEAN PATENT APPLICATION**
published in accordance with Art. 153(4) EPC

(43) Date of publication:
08.03.2017 Bulletin 2017/10

(51) Int Cl.:
*G01J 1/42* (2006.01)     *H04N 5/33* (2006.01)

(21) Application number: 15782385.7

(22) Date of filing: 15.04.2015

(86) International application number:
PCT/JP2015/002080

(87) International publication number:
WO 2015/162876 (29.10.2015 Gazette 2015/43)

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME
Designated Validation States:
MA

(30) Priority: 22.04.2014 JP 2014088506

(71) Applicant: NEC Corporation
Tokyo 108-8001 (JP)

(72) Inventor: OKUYAMA, Kuniyuki
Tokyo 108-8001 (JP)

(74) Representative: Vossius & Partner
Patentanwälte Rechtsanwälte mbB
Siebertstrasse 3
81675 München (DE)

(54) **SEMICONDUCTOR DEVICE, INFRARED IMAGING DEVICE EQUIPPED WITH SAID SEMICONDUCTOR DEVICE, AND METHOD FOR MANUFACTURING SEMICONDUCTOR DEVICE**

(57) The purpose of the present invention is to shorten the time needed for the terminal voltage of a bolometer element to converge to bias voltage, shorten the reset interval of an integration circuit, and improve the temperature resolution. This semiconductor device is provided with a means for presenting a bias voltage to a bolometer element. A bias circuit that inputs to an integration circuit the differential current of the current flowing to the bolometer element when the bias voltage is presented to the bolometer element, and the current from a bias cancel circuit that eliminates offset current of the bolometer element, pre-charges the bolometer element at a prescribed pre-charge voltage.

Fig. 10

**Description**

[Technical Field]

The present invention relates to a semiconductor device, an infrared imaging device equipped with the semiconductor device, and a method for controlling a semiconductor device.

[Background Art]

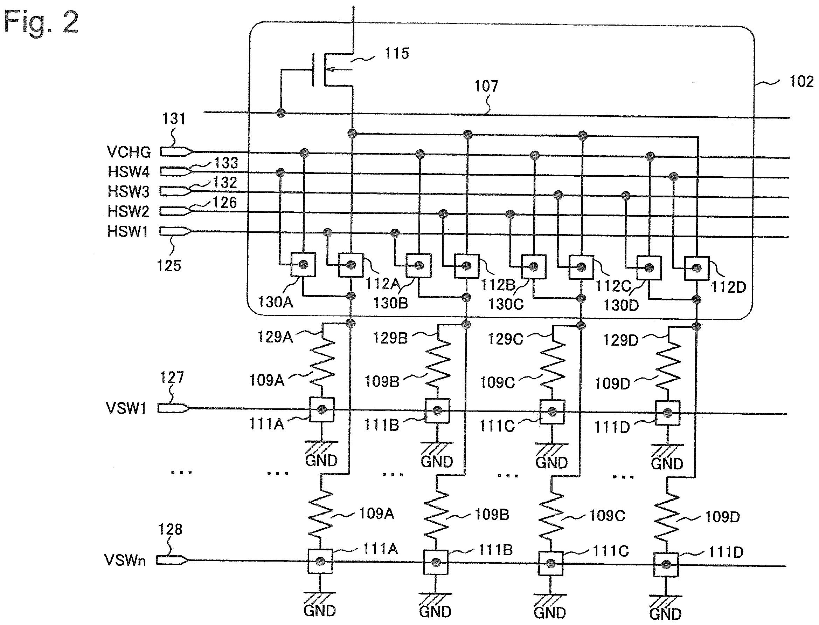

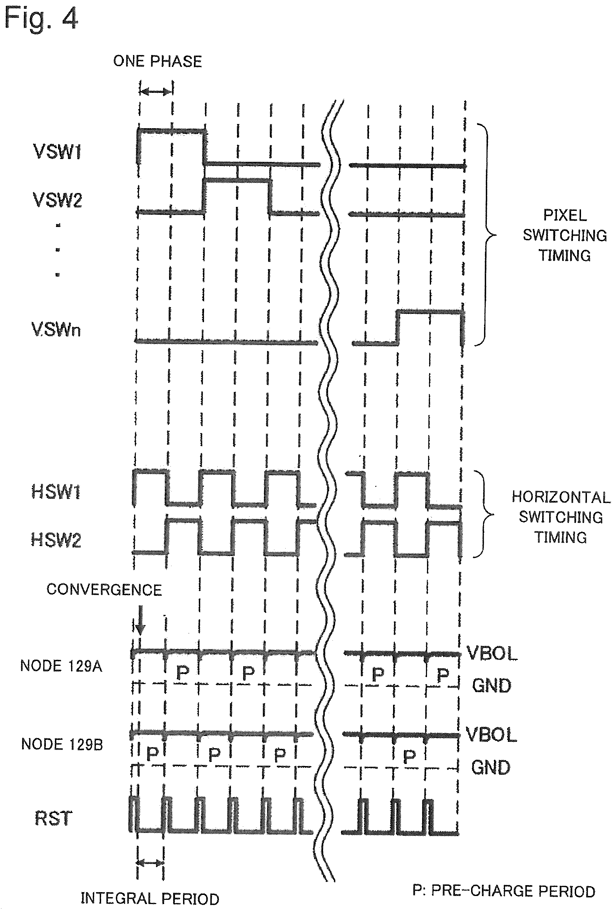

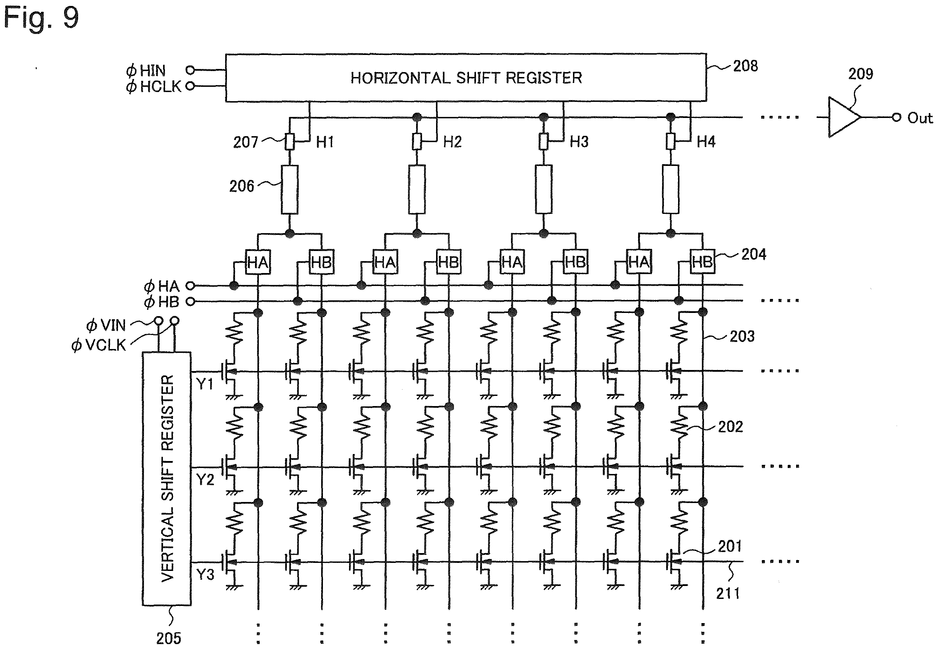

As an infrared imaging device, for example, a bolometer-type infrared imaging device composed of a sensor array and a read circuit, as illustrated in Fig. 9, is known. Fig. 9 is a citation from Fig. 2 in PTL1 (Fig. 4 in PTL2). Although the disclosures of PTL1 and PTL 2 by themselves are not directly related to a subject matter of the present invention to be described later, the drawings are cited for description of an example of an outline of a bolometer-type infrared imaging device based on a two-dimensional sensor array.

With reference to Fig. 9, a bolometer element (thermoelectric transducer) 202 in this example is formed as a two-dimensional matrix on a substrate to constitute a two-dimensional sensor array. The bolometer element 202 is switched by a pixel switch 201 and a horizontal switch 204 to be successively selected. The pixel switch 201 provided at an intersection of a signal line 203 and a scanning line 211 is composed of an Nch-MOSFET (Metal Oxide Semiconductor Field Effect Transistor). A source of the Nch-MOSFET constituting the pixel switch 201 is connected to reference potential GND (ground), a drain is connected to the signal line 203 through the bolometer element 202, and a gate is connected to the scanning line 211. A vertical shift register 205 successively selects respective rows of the two-dimensional matrix by successively activating scanning signals 211 (Y1 to Y3). The signal line 203 is connected to a read circuit 206 through the horizontal switches 204 (HA and HB). On-off control of the horizontal switches 204 (HA and HB) is performed by selection signals φHA and φHB. For example, in a first phase, the selection signal φHA is activated and the horizontal switch 204 (HA) is turned on, and, in a succeeding second phase, the selection signal φHB is activated and the horizontal switch 204 (HB) is turned on. An output of the read circuit 206 is connected to an output buffer 209 through a multiplexer switch 207. On-off control of the multiplexer switch 207 is performed by a horizontal shift register 208.

In the example in Fig. 9, two horizontal switches 204 are connected to one read circuit 206 (one read circuit 206 for two columns of the two-dimensional matrix). The purpose is to reduce a circuit area and power consumption by reducing a number of the read circuits 206 with respect to a number of columns of the two-dimensional sensor array. For example, in a configuration in which one horizontal switch 204 is connected to one read circuit 206, the number of the read circuits 206 required is the number of columns of the two-dimensional sensor array. By contrast, in a configuration in which two horizontal switches 204 are connected to one read circuit 206, as illustrated in Fig. 9, the number of the read circuits 206 with respect to the number of columns of the two-dimensional sensor array becomes half, enabling reduction of a circuit area and power consumption.

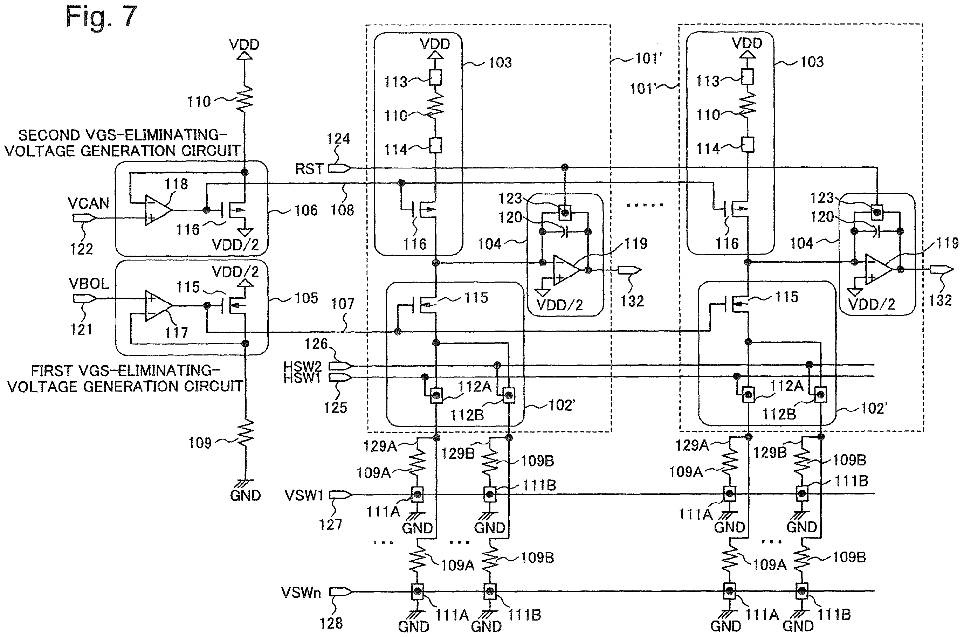

Fig. 7 is a diagram exemplifying a reference example of a read circuit in a bolometer-type infrared imaging device (is also a comparative example according to the present invention). It should be noted that the reference example in Fig. 7 is presented by the present inventor as a prototypical example for describing an underlying technology of the present invention, and is not the very drawing described in a literature or the like.

In Fig. 7, a read circuit 101' reading current flowing through a bolometer element is configured to include the read circuit 206 in Fig. 9 and the horizontal switches 204 (HA and HB) in Fig. 9. The reason is as follows.

As will become apparent in description of Fig. 7, bias voltage (VBOL) is applied to the bolometer element when a horizontal switch is turned on. Accordingly, the horizontal switch is included as a bias circuit applying the bias voltage to the bolometer element. The same holds for exemplary embodiments to be described later.

Bolometer elements 109A and 109B in Fig. 7 correspond to the bolometer elements 202 respectively connected to the horizontal switches 204 (HA and HB) in Fig. 9. Selection signals HSW1 and HSW2 in Fig. 7 respectively correspond to φHA and φHA in Fig. 9. Pixel switches 111A and 111B in Fig. 7 correspond to the pixel switch 201 in Fig. 9. Scanning signals VSW1 to VSWn in Fig. 7 correspond to the scanning lines 211 (Y1 to Y3) in Fig. 9. Similarly to the aforementioned configuration in Fig. 9, two horizontal switches 112A and 112B are provided for one read circuit 101' in Fig. 7.

With reference to Fig. 7, the read circuit 101' includes a bias circuit 102', a bias-cancelling circuit 103, and an integration circuit 104.

The bias circuit 102' applies constant voltage to the bolometer elements 109A and 109B. The bias-cancelling circuit 103 eliminates offset current of a component other than a signal of a subject. The integration circuit 104 includes an operational-amp (operational amplifier) 119 connected to the bias circuit 102' and the bias-cancelling circuit 103.

A plurality of read circuits 101' are supplied with input voltage as bias voltage through input voltage wirings 107 and 108, and respectively perform operations simultaneously in parallel. An operation of the read circuit 101' is outlined as follows.

A resistance change of each of the bolometer elements 109A and 109B is caused depending on an intensity of infrared incident light from a subject. A resistance change of the bolometer element 109A is detected as difference current between current flowing through the bolometer element 109A determined by bias voltage (VBOL), and current in the bias-cancelling circuit 103 determined by bias voltage (VCAN). A resistance change of the bolometer element 109B is detected as difference current between current flowing through the bolometer element 109B determined by the bias voltage (VBOL), and current in the bias-cancelling circuit 103 determined by the bias voltage (VCAN). The bias voltage (VBOL) is input voltage applied to an input terminal 121, and the bias voltage (VCAN) is input voltage applied to an input terminal 122. Further, the current in the bias-cancelling circuit 103 determined by the bias voltage (VCAN) is current flowing through a resistance element (bias-cancelling resistance) 110.

The difference current is input to the integration circuit 104, integrated, and output from an output terminal 132 as an output signal (output voltage) of the read circuit 101'. The output signal from the output terminal 132 in the read circuit 101' is input to an unillustrated multiplexer switch, and output to an unillustrated output buffer through the multiplexer switch. The unillustrated multiplexer switch corresponds to the multiplexer switch 207 in Fig. 9. Further, the unillustrated output buffer corresponds to the output buffer 209 in Fig. 9.

Operations of the bias circuit 102' and the bias-cancelling circuit 103 in Fig. 7 are, for example, as follows. First, in a state that a shutter (unillustrated) of the bolometer-type infrared imaging device is closed (that is, in a state that light from the subject is not incident), input voltage (VBOL and VCAN) is adjusted. The adjustment balances current flowing on the part of the bolometer elements 109A and 109B, and current flowing through the resistance element (bias-cancelling resistance) 110. Subsequently, by opening the shutter (unillustrated) of the bolometer-type infrared imaging device, amounts of current changes accompanying resistance changes of the bolometer elements 109A and 109B due to light incident from the subject can be extracted.

Each circuit will be described with reference to Fig. 7. In Fig. 7, a series circuit of the bolometer element 109A and the pixel switch 111A, and a series circuit of the bolometer element 109B and the pixel switch 111B respectively correspond to a series circuit of the bolometer element 202 and the pixel switch 201 in Fig. 9.

The bias circuit 102' includes an NMOS (N-channel Metal Oxide Semiconductor) transistor (also referred to as "bias transistor") 115 and horizontal switches 112A and 112B.

A gate of the NMOS transistor 115 is connected to the input voltage wiring 107, a drain is connected to an input end of the integration circuit 104, and a source is connected to a connecting point of one end of the horizontal switch 112A and one end of the horizontal switch 112B. The NMOS transistor 115 has a source follower configuration, and a source potential of the NMOS transistor 115 is set to the bias voltage (VBOL).

On-off control of the horizontal switches 112A and 112B is respectively performed by the selection signals HSW1 and HSW2 input from input terminals 125 and 126. For example, in a first phase, the selection signal HSW1 is activated (for example, set to High level), and the horizontal switch 112A is turned on. In a succeeding second phase, the selection signal HSW2 is activated, and the horizontal switch 112B is turned on.

There are n series circuits of the bolometer elements 109A and the pixel switches 111A connected in parallel with one another between the other end of the horizontal switch 112A (node 129A) and a reference potential (GND). There are n series circuits of the bolometer elements 109B and the pixel switches 111B connected in parallel with one another between the other end of the horizontal switch 112B (node 129B) and the reference potential (GND). Denoting a number of the read circuits 101' by M, the sensor array is a two-dimensional array with an n rows $\times$ 2M columns configuration.

While not particularly limited, in the example in Fig. 7, an input terminal 127 is connected to pixel switches 111A and 111B arranged closest to the horizontal switches 112A and 112B. The scanning signal VSW1 scanning a first line is supplied to the input terminal 127, and performs common on-off control of the pixel switches 111A and 111B. An input terminal 128 is connected to pixel switches 111A and 111B arranged farthest from the horizontal switches 112A and 112B. The scanning signal VSWn scanning an n-th line is supplied to the input terminal 128, and performs common on-off control of the pixel switches 111A and 111B.

The example in Fig. 7 may be configured to supply the scanning signal VSWn to the pixel switches 111A and 111B arranged closest to the horizontal switches 112A and 112B. Further, the example may be configured to supply the scanning signal VSW1 to the pixel switches 111A and 111B arranged farthest from the horizontal switches 112A and 112B.

The scanning signals VSW1 to VSWn are supplied from an unillustrated vertical shift register (corresponding to, for example, the vertical shift register 205 in Fig. 9). Denoting a frame period by T (for example, 1/30 second), a scanning period of one line (one horizontal scanning period: also referred to as "1 H") is defined as a value T/n obtained by dividing T by n. The scanning signals VSW1 to VSWn are successively activated for a period of T/n with one frame period T as a cycle. One phase period is T/(2xn), and the horizontal switches 112A and 112B are alternately set to on for every period T/(2$\times$n).

The bolometer elements 109A and 109B are selected by on-off switching of pixel switches 111A and 111B on n lines, and alternate on-off switching of the horizontal switch 112A and 112B for each phase. The on-off switching of the pixel switches 111A and 111B on the n lines is performed by the scanning signals VSW1 to VSWn from the vertical shift register (205 in Fig. 9). Bias voltage is applied to one end of thus selected bolometer element 109A or 109B.

Specifically, the bias voltage (VBOL) is applied to a node 129A or 129B connected to one end of the bolometer element 109A or 109B. The bias voltage (VBOL) is applied to a node 129A or 129B connected to one end of a bolometer element 109A or 109B connected to a horizontal switch 112A or 112B in an on-state, out of the nodes 129A or 129B. Further, the bolometer element 109A or 109B is included in bolometer elements 109A and 109B connected to pixel switches 111A and 111B on an i-th line supplied with the activated scanning signal VSW i ($1 \leq i \leq n$).

When a resistance value of a selected bolometer element 109A or 109B decreases, a value of current flowing through the bolometer element 109A or 109B increases, since voltage applied to a node 129A or 129B connected to one end of the bolometer element 109A or 109B is constant. In other words, when a resistance value of the selected bolometer element 109A or 109B decreases, a value of current flowing through the NMOS transistor 115 increases, since voltage applied to the node 129A or 129B connected to one end of the bolometer element 109A or 109B is constant.

On the other hand, when a resistance value of a selected bolometer element 109A or 109B increases, current flowing through the selected bolometer element 109A or 109B decreases, since voltage of a node 129A or 129B connected to one end of the bolometer element 109A or 109B is constant. In other words, when a resistance value of the selected bolometer element 109A or 109B increases, a value of current flowing through the NMOS transistor 115 decreases, since voltage of the node 129A or 129B connected to one end of the bolometer element 109A or 109B is constant.

Thus, a change in a resistance value of a bolometer element 109A or 109B due to light incident from the subject is converted into a current value flowing through the NMOS transistor 115 in the bias circuit 102'.

A first VGS-eliminating-voltage generation circuit 105 is a circuit applying bias voltage to the input voltage wiring 107. The first VGS-eliminating-voltage generation circuit 105 is composed of an operational amplifier 117 and an NMOS transistor 115 having an identical configuration to the NMOS transistor 115 in the bias circuit 102'. A non-inverting input terminal (+) of the operational amplifier 117 is connected to the input terminal 121 to receive voltage (VBOL), and an inverting input terminal (-) is connected to a source of the NMOS transistor 115 having a source follower configuration in the first VGS-eliminating-voltage generation circuit 105. An output of the operational amplifier 117 is connected, in common, to a gate of the NMOS transistor 115 in the first VGS-eliminating-voltage generation circuit 105, and gates of the NMOS transistors 115 in a plurality of the bias circuits 102'.

In the first VGS-eliminating-voltage generation circuit 105, input voltage (bias voltage VBOL) is supplied to the input terminal 121. The operational amplifier 117 has a voltage follower configuration. The operational amplifier 117 controls a gate potential of the NMOS transistor 115 so that a source potential of bias transistors 115 is voltage (VBOL) input to the non-inverting input terminal (+). The NMOS transistors 115, a gate potential of which is controlled by the operational amplifier 117, include the NMOS transistor 115 in the first VGS-eliminating-voltage generation circuit 105 and the NMOS transistor 115 in the bias circuit 102' in the read circuit 101'.

The first VGS-eliminating-voltage generation circuit 105 has a configuration in which influence of fluctuation of gate-to-source voltage VGS of an NMOS transistor 115 and the like does not appear in drain current of the NMOS transistor 115 (configuration compensating for a VGS voltage drop). For example, influence of a temperature coefficient of gate-to-source voltage VGS of an NMOS transistor 115 (such as temperature drift) is eliminated. Such a configuration enables highly precise control of the bias voltage (VBOL) applied to the node 129A or 129B connected to one end of the bolometer element 109A or 109B. In the first VGS-eliminating-voltage generation circuit 105, the operational amplifier 117 having a voltage follower configuration drives the NMOS transistor 115 at low impedance, and therefore is able to suppress noise and the like getting into the read circuit 101'.

The bias-cancelling circuit 103 includes a pixel switch 113, a horizontal switch 114, and a PMOS (P-channel Metal Oxide Semiconductor) transistor 116. The pixel switch 113 in the bias-cancelling circuit 103 is connected between a power source VDD and one end of the resistance element (also referred to as "bias-cancelling resistance") 110. One end of the horizontal switch 114 in the bias-cancelling circuit 103 is connected to the other end of the resistance element 110. A source of the PMOS transistor 116 in the bias-cancelling circuit 103 is connected to the other end of the horizontal switch 114, a drain is connected to the drain of the NMOS transistor 115 in the bias circuit 102', and a gate is connected to the input voltage wiring 108.

An infrared signal has a large DC (direct current) offset component, and a signal component from the subject exists on the offset component at a microscopic level. The bias-cancelling circuit 103 eliminates the offset component.

Further, similarly to the first VGS-eliminating-voltage generation circuit 105, a second VGS-eliminating-voltage generation circuit 106 includes a PMOS transistor 116 having an identical configuration to the PMOS transistor 116 in the bias-cancelling circuit 103, and an operational amplifier 118. A non-inverting input terminal (+) of the operational amplifier 118 is connected to the input terminal 122 to receive voltage (VCAN), and an inverting input terminal (-) is connected to a source of the PMOS transistor 116 having a source follower configuration in the second VGS-eliminating-voltage generation circuit 106. An output of the operational amplifier 118 is connected, in common, to the gate of the PMOS transistor 116 in the second VGS-eliminating-voltage generation circuit 106, and gates of the PMOS transistors 116 in a plurality of the bias-cancelling circuits 103.

The drain of the NMOS transistor 115 in the bias circuit 102' in the read circuit 101' is connected to a connecting point of an inverting input terminal (-) of the operational amplifier 119 in the integration circuit 104, and one end of an integrating capacitor 120. The drain of the PMOS transistor 116 in the bias-cancelling circuit 103 in the read circuit 101' is connected to a connecting point of the inverting input terminal (-) of the operational amplifier 119 in the integration circuit 104, and one end of the integrating capacitor 120.

The other end of the integrating capacitor 120 is connected to an output terminal of the operational amplifier 119. A non-inverting input terminal (+) of the operational amplifier 119 is connected to VDD/2. Due to an imaginary short (imaginary short circuit), a potential difference between the inverting input terminal (-) and the non-inverting input terminal (+) of the operational amplifier 119 is 0 V. Additionally, due to the imaginary short (imaginary short circuit), drain voltage of the NMOS transistor 115 and the PMOS transistor 116 connected, in common, to the inverting input terminal (-) of the operational amplifier 119 is set to VDD/2.

Voltage of the integrating capacitor 120 on a feedback path of the operational amplifier 119 after integration at the integrating capacitor 120 is taken from the output terminal of the operational amplifier 119. Additionally, the voltage is input from each read circuit 101' to the output buffer 209 in Fig. 9 as an output signal through the multiplexer switch 207 in Fig. 9, and is successively output.

Further, a switch 123 for resetting is connected between the inverting input terminal (-) of the operational amplifier 119 and the output terminal of the operational amplifier 119, in parallel with the integrating capacitor 120. The switch 123 for resetting is turned on when a reset signal RST input to an input terminal 124 is activated (for example, RST is at a High level), and is turned off when RST is deactivated (for example, at a Low level). By activating the reset signal RST after outputting a voltage value integrated at the integrating capacitor 120 to set the switch 123 to an on-state, the output terminal of the operational amplifier 119 is set to VDD/2 being voltage of the non-inverting input terminal (+) of the operational amplifier 119. In other words, when the reset signal RST is activated, voltage of the both ends of the integrating capacitor 120 is reset to an equipotential (VDD/2).

After the integrating capacitor 120 is reset, the integration circuit 104 performs an integral operation. Specifically, when the reset signal RST is deactivated (for example, set to Low level) and the switch 123 is turned off, the integrating capacitor 120 is charged in the integration circuit 104. The charge is performed by current AI (= ID1 - ID2) obtained by subtracting drain current ID2 (source current) of the PMOS transistor 116 in the bias-cancelling circuit 103 from drain current ID1 (sink current) of the NMOS transistor 115 in the bias circuit 102'. Then, the integration circuit 104 outputs voltage Vout as expressed in following equation (1) to the output terminal 132.

$$V_{out} = \frac{-1}{C} \int_0^t \Delta I dt + \frac{V_{DD}}{2} \cdots\cdots (1)$$

C denotes a capacitance value of the integrating capacitor 120, and t denotes an integral period.

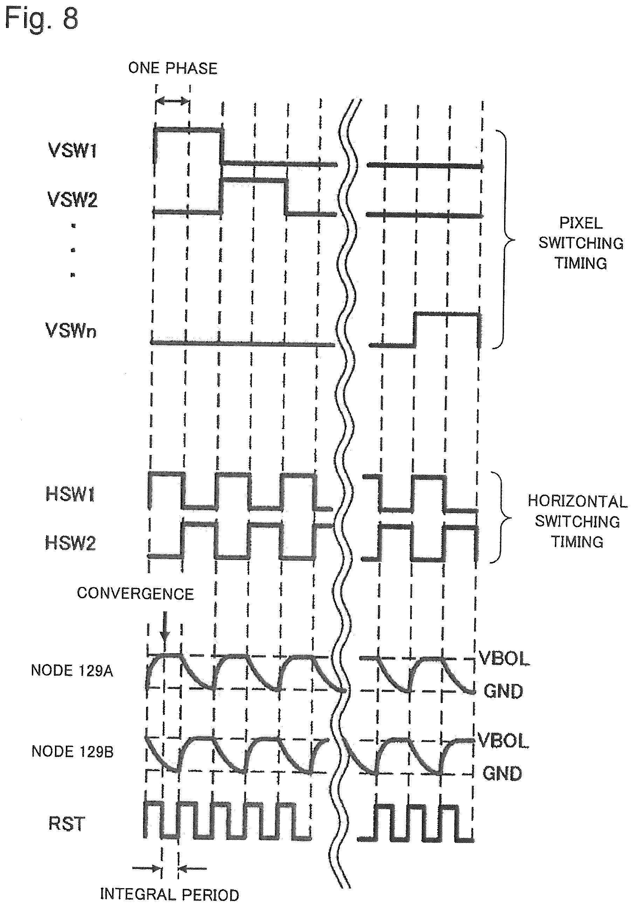

Fig. 8 is a diagram illustrating an operation of the reference example (prototypical example) illustrated in Fig. 7. Fig. 8 schematically illustrates voltage waveforms of the scanning signals VSW1 to VSWn, the selection signals HSW1 and HSW2, nodes 129A and 129B, and the reset signal RST, in Fig. 7.

The scanning signals VSW1 to VSWn output from the vertical shift register 205 in Fig. 9 are set in an active state (High) for a period of time obtained by dividing one frame period into n. The pixel switches 111A and 111B on n lines to which the scanning signals VSW1 to VSWn are respectively supplied, are successively set to an on-state by activating corresponding scanning signals. As described above, the scanning signals VSW1 to VSWn are successively activated for a horizontal scanning period (T/n) with a frame period T as a cycle.

The horizontal switches 112A and 112B are turned on in respective active periods (High periods) of the scanning signals VSW1 to VSWn. For example, by the selection signals HSW1 and HSW2 alternately activated in a first phase and a second phase, the horizontal switch 112A is turned on in the first phase, and the horizontal switch 112B is turned on in the second phase.

For example, when the scanning signal VSW1 is in the active state (for example, at a High level), the horizontal switch 112A is turned on in an active state period (High-level period) of the selection signal HSW1, in the first phase. The node 129A being a connection destination of the horizontal switch 112A is connected to the source of the NMOS transistor 115 in the active state period (High-level period) of the selection signal HSW1. Consequently, drain current from the NMOS transistor 115 is supplied to a bolometer element 109A on the first line, and flows to the reference potential GND through a pixel switch 111A in the on-state on the first line. Voltage of the node 129A connected to one end of the bolometer element 109A rises from the GND potential when the selection signal HSW1 is in an inactive state, to the bias voltage (VBOL).

The reset signal RST performing on-off control of the switch 123 in the integration circuit 104 is activated (for example, set to High level) at a start timing of activation of the selection signal HSW1 (timing of phase switching) to reset the integrating capacitor 120. In other words, the reset signal RST is activated at a start timing of activation of the selection signal HSW1 to discharge an electric charge in the integrating capacitor 120. The activated reset signal RST is deactivated (for example, set to Low level) at a predetermined timing at which the voltage of the node 129A converges to the bias voltage (VBOL), to turn off the switch 123. The integration circuit 104 performs an integral operation in an inactive state period of the reset signal RST.

In the inactive state period (Low-level period: second phase) of the selection signal HSW1 (HSW2 is in the active state), the horizontal switch 112A is turned off, and the node 129A is electrically isolated from the source of the NMOS transistor 115. In other words, in the inactive state period of the selection signal HSW1, the horizontal switch 112A is turned off, and supply of the drain current from the NMOS transistor 115 to the node 129A is suspended. Consequently, an electric charge at the node 129A is discharged through the selected bolometer element 109A on the first line and the pixel switch 111A in the on-state, and the voltage of the node 129A becomes the GND level.

The node 129B, being a connection destination of the horizontal switch 112B being turned on in the active state period (High-level period) of the selection signal HSW2 in the second phase, is connected to the source of the NMOS transistor 115. The drain current from the NMOS transistor 115 is supplied to a bolometer element 109B on the first line. Consequently, voltage of the node 129B connected to one end of the bolometer element 109B rises from the GND potential when the selection signal HSW2 is in the inactive state, to the voltage (VBOL).

The reset signal RST is activated (set to High level) at a start timing of activation of the selection signal HSW2, and is deactivated (set to Low level) at a predetermined timing at which the voltage of the node 129B converges to the bias voltage (VBOL). The reset signal RST turns off the switch 123 in the integration circuit 104, and the integration circuit 104 starts an integral operation.

In the inactive state period (Low-level period) of the selection signal HSW2, the horizontal switch 112B is turned off, and the node 129B is electrically isolated from the source of the NMOS transistor 115 (supply of the drain current from the NMOS transistor 115 is suspended). Consequently, an electric charge at the node 129B is discharged to the GND side through the selected bolometer element 109B on the first line and the pixel switch 111B in the on-state, and the voltage of the node 129B becomes the GND level.

As described above, in Fig. 8, a reset period (reset signal RST: High level) and an integral period (reset signal RST: Low level) are included in one phase period. In the reset period in which the reset signal RST is in an active state, an electric charge in the integrating capacitor 120 in the integration circuit 104 is discharged, and, at the same time, the horizontal switches 112A and 112B are switched to select a column (bolometer element 109A or 109B) to be read. In the integral period, the integrating capacitor 120 is charged by difference current between current flowing through the selected bolometer element 109A or 109B, and current in the bias-cancelling circuit 103. A pair of a reset period and an integral period is repeated for each phase.

The reset period is determined in accordance with a discharge time of the integrating capacitor 120, a time taken by voltage of the node 129A or 129B to converge to the bias voltage (VBOL) (convergence time) upon switching of the horizontal switch 112A and 112B, and the like.

When integration is started in a state that the integrating capacitor 120 in the integration circuit 104 is not completely reset (discharged) (in a state that a stored charge remains), offset voltage corresponding to a residual stored charge, for example, is added to the output voltage of the integration circuit 104.

Further, in a following case, a value of current flowing through the bolometer element 109A or 109B is less than a value of current flowing when the voltage of the node 129A or 129B converges to the bias voltage (VBOL). The case is that the voltage of the node 129A or 129B in the bias circuit 102' does not converge to the bias voltage (VBOL) (in a state that the voltage is lower than the bias voltage [VBOL]).

Accordingly, when integration is started in the integration circuit 104 before the voltage of the node 129A or 129B converges to the bias voltage (VBOL) in the bias circuit 102', it is not considered that the aforementioned difference current is correctly integrated. The aforementioned difference current represents a difference between current flowing through the bolometer element 109A or 109B (the drain current of the NMOS transistor 115) and the drain current of the PMOS transistor 116 in the bias-cancelling circuit 103. In order to provide correct integration of the aforementioned difference current, the reset period is set sufficiently long so that a period for completion of discharge of the integrating capacitor 120 in the integration circuit 104 and voltage convergence of the node 129A or 129B is secured.

As understood from the voltage waveform of the reset signal RST in Fig. 8, when the reset period is lengthened in a phase period (= $T/(2 \times n)$ where T: one frame period and n: number of lines) set to a predetermined value, the integral period needs to be shortened correspondingly.

In signal amplification by the integration circuit 104, an input noise component is amplified as well as an input signal component. By lowering a frequency band of the integration circuit 104 (lengthening the integral period), the input noise component can be reduced. In order to lower the band of the integration circuit 104 driven in a constant cycle, the reset period needs to be shortened, and the integral period needs to be lengthened.

[Citation List]

[Patent Literature]

[PTL1] Japanese Patent Application Laid-open No. 2003-318712
[PTL2] Japanese Patent Application Laid-open No. 2008-22457

[Summary of Invention]

[Technical Problem]

An analysis of the aforementioned reference example is provided below. The following analysis is based on the present inventor's view.

In the reference example in Fig. 7, the node 129A, being a connection destination of the horizontal switch 112A being turned on in the active state period of the selection signal HSW1 in the first phase, rises from the GND potential to the bias voltage (VBOL) in a period in which the selection signal HSW1 is in the active state. The reason is that current flowing through the NMOS transistor 115 in the bias circuit 102' (drain-to-source current) flows to the selected bolometer element 109A through the horizontal switch 112A. Thus, the voltage of the node 129A rises from the GND potential to the source voltage of the NMOS transistor 115 in the bias circuit 102', that is, the bias voltage (VBOL).

Similarly, the node 129B, being a connection destination of the horizontal switch 112B being turned on in the active state period of the selection signal HSW2 in the second phase, rises from the GND potential to the bias voltage (VBOL) in a period in which the selection signal HSW2 is in the active state. The reason is that the aforementioned current flowing through the NMOS transistor 115 in the bias circuit 102' flows to the selected bolometer element 109B through the horizontal switch 112B. Thus, the voltage of the node 129B rises from the GND potential to the source voltage of the NMOS transistor 115 in the bias circuit 102', that is, the bias voltage (VBOL).

In Fig. 7, an RC series circuit is formed by following resistance value, wiring resistance, and parasitic capacitance:

• a resistance value of the bolometer element 109A (109B) and wiring resistance between the bolometer element 109A (109B) and the horizontal switch 112A (112B), and

• parasitic capacitance of the bolometer element 109A (109B) and parasitic capacitance in a signal wiring between the bolometer element 109A (109B) and the horizontal switch 112A (112B).

Further, when the horizontal switch 112A (112B) is an analog switch (pass transistor) or the like, on-resistance and parasitic capacitance take non-negligible values. When the voltage of the node 129A (129B) rises from the GND potential to the bias voltage (VBOL), delay of signal voltage due to the RC series circuit becomes a problem.

When the horizontal switch 112A is turned on to apply the bias voltage to the node 129A, a time taken by the voltage of the node 129A to rise from the GND level and converge to the bias voltage (VBOL) is delayed at a time constant CR of the RC series circuit. When the horizontal switch 112B is turned on to apply the bias voltage to the node 129B, a time taken by the voltage of the node 129B to rise from the GND level and converge to the bias voltage (VBOL) is delayed at the time constant CR of the RC series circuit.

It is preferable in the integration circuit 104 that difference current between current flowing through the bias circuit 102' and current flowing through the bias-cancelling circuit 103 is integrated in a state that the voltage of the node 129A (129B) completely converges to the bias voltage (VBOL). The current flowing through the bias circuit 102' represents current flowing through a selected bolometer element. In the integration circuit 104, an integral operation of the difference current is started when the reset signal RST transitions from the active state to the inactive state, and the integral operation of the difference current is performed while the reset signal RST is in the inactive state.

Accordingly, in order to cope with delay in convergence of the voltage of the node 129A (129B) to the bias voltage (VBOL), the active state period (reset period) of the reset signal RST needs to be lengthened.

When the reset period in the integration circuit 104 is lengthened, the integral period is correspondingly shortened since the phase period is constant. Shortening the integral period represents rise in the frequency band of the integration circuit 104. In other words, the integration circuit 104 functions as a Low Pass Filter. In the integration circuit 104, rise in the band represents rise in a cutoff frequency, and, for example, an input noise component may not be sufficiently reduced. Increase in the noise component in an output signal of the integration circuit 104 represents degradation of an S/N ratio (Signal to Noise Ratio). The degradation causes degradation of temperature resolution of the bolometer-type infrared imaging device. In other words, temperature resolution supposed to be obtainable may not be obtained.

Therefore, an object of the present invention is to provide a device and a method that solve the aforementioned problem.

[Solution to Problem]

By an aspect of the present invention, a semiconductor device is provided, in which the semiconductor device comprising: at least one bolometer element; and a bias circuit including means for applying bias voltage to the bolometer element, and inputting difference current between current flowing through the bolometer element when the bias voltage is applied to the bolometer element, and current from a bias-cancelling circuit eliminating offset current of the bolometer element, to an integration circuit, wherein the bias circuit further includes pre-charge means for pre-charging the bolometer element with predetermined pre-charge voltage.

By the other aspect of the present invention, a method for controlling a semiconductor device is provided, in which the method comprising: when bias voltage is applied to a bolometer element from a bias circuit, outputting an integrated value, by an integration circuit, of difference current between the current flowing through the bolometer element, and current from a bias-cancelling circuit eliminating offset current of the bolometer element; and pre-charging the bolometer element with predetermined pre-charge voltage.

[Advantageous Effect of Invention]

The present invention is able to shorten a time taken by terminal voltage of a bolometer element to converge to bias voltage to shorten a reset period of an integration circuit, and to improve temperature resolution.

[Brief Description of Drawings]

[Fig. 1] Fig. 1 is a diagram illustrating a configuration according to a first exemplary embodiment of the present invention.
[Fig. 2] Fig. 2 is a diagram illustrating a configuration according to a second exemplary embodiment of the present invention.
[Fig. 3] Fig. 3 is a diagram illustrating a configuration according to a third exemplary embodiment of the present invention.
[Fig. 4] Fig. 4 is a diagram illustrating an operation according to the first exemplary embodiment of the present invention.
[Fig. 5] Fig. 5 is a diagram illustrating an operation according to the second exemplary embodiment of the present invention.
[Fig. 6] Fig. 6 is a diagram illustrating an operation according to the third exemplary embodiment of the present invention.
[Fig. 7] Fig. 7 is a diagram illustrating a configuration of a reference example.
[Fig. 8] Fig. 8 is a diagram illustrating a timing operation of the reference example.
[Fig. 9] Fig. 9 is a diagram illustrating a configuration of PTL1.
[Fig. 10] Fig. 10 is a diagram illustrating a basic concept of the present invention.
[Fig. 11] Fig. 11 is a diagram illustrating an aspect of the present invention.

[Description of Embodiments]

First, an overview of the present invention will be described, and then exemplary embodiments will be described.

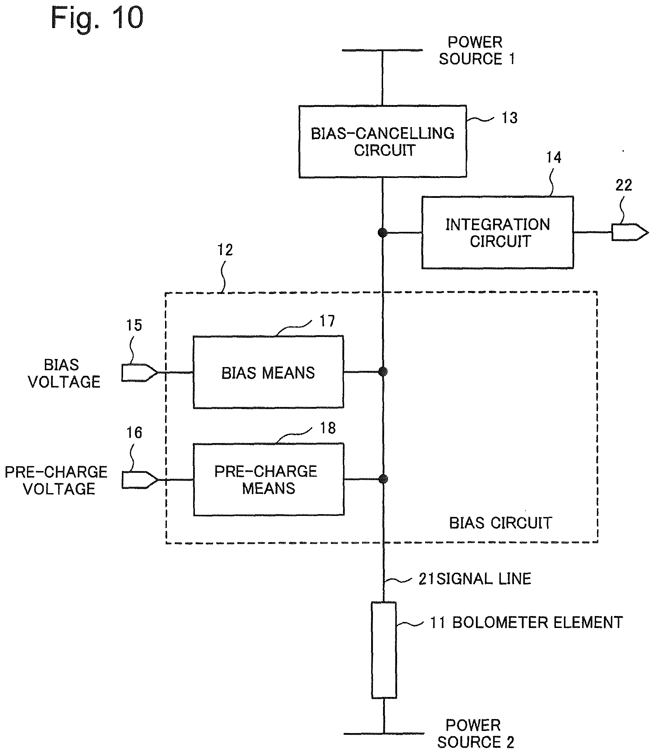

Fig. 10 is a diagram illustrating a basic concept of the present invention. With reference to Fig. 10, an aspect of the present invention includes at least one bolometer element 11 and a bias circuit 12 including a bias means 17 as an example of a means for applying bias voltage to the abovementioned bolometer element 11.
The bias circuit 12 in Fig. 10 is connected to a bias-cancelling circuit 13 generating current eliminating offset current of the aforementioned bolometer element 11, and an integration circuit 14. The bias circuit 12 inputs difference current between current flowing through the aforementioned bolometer element 11 when the aforementioned bias voltage is applied to one end of the aforementioned bolometer element 11, that is, a signal line 21, and current from the aforementioned bias-cancelling circuit 13, to the integration circuit 14. The bias circuit 12 further includes a pre-charge means 18 pre-charging the aforementioned bolometer element 11 with pre-charge voltage.
The aforementioned pre-charge means 18 according to the exemplary embodiments of the present invention applies the aforementioned pre-charge voltage to one end of the aforementioned bolometer element 11 in a partial period or an entire period of a period in which the aforementioned bolometer element 11 is not biased by the aforementioned bias voltage.

The aforementioned pre-charge means 18 according to the exemplary embodiments of the present invention may apply the aforementioned pre-charge voltage to one end of the aforementioned bolometer element 11 in a partial period. The aforementioned partial period represents at least a partial period of a period in which the aforementioned bolometer element 11 is not biased by the aforementioned bias voltage, including a period immediately before the aforementioned bolometer element 11 is biased by the aforementioned bias voltage.

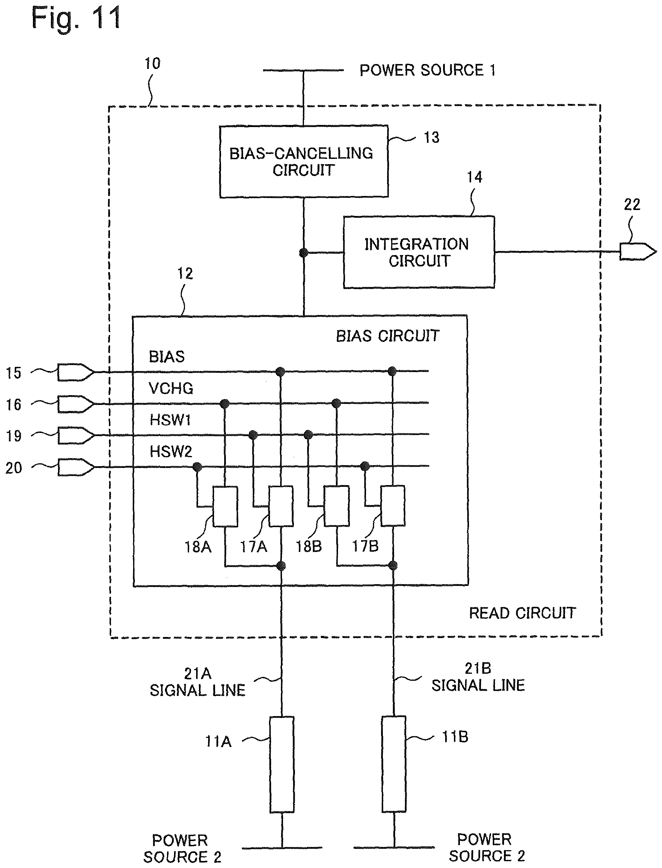

Fig. 11 is a diagram illustrating one aspect of the present invention. With reference to Fig. 11, a read circuit 10 according to the one aspect of the present invention reading current flowing through a bolometer element, includes a bias circuit 12, a bias-cancelling circuit 13, and an integration circuit 14. The bias-cancelling circuit 13 cancels offset current of the bias circuit 12. The integration circuit 14 integrates difference current between current flowing through the bolometer element and current from the bias-cancelling circuit 13, and outputs the integrated result from an output terminal 22.

As an example of the aforementioned bias means 17 in Fig. 10, the bias circuit 12 in Fig. 11 includes first and second switches 17A and 17B that are alternately turned on at intervals of a predetermined period, and supply the aforementioned bias voltage when being in an on-state.

As an example of the aforementioned pre-charge means 18 in Fig. 10, the bias circuit 12 in Fig. 11 includes pre-charge means 18A and 18B.

An input terminal 15 is applied to bias voltage (BIAS). An input terminal 16 is applied to pre-charge voltage (VCHG). An input terminal 19 is applied to a selection signal (HSW1). An input terminal 20 is applied to a selection signal (HSW2).

The pre-charge means 18B as a pre-charge circuit applies the aforementioned pre-charge voltage (VCHG) to one end of a second bolometer element 11B connected to the aforementioned second switch 17B in an off-state, that is, a signal line 21B. The supply of the pre-charge voltage (VCHG) is performed in a period in which a first switch 17A is turned on, and the aforementioned bias voltage (BIAS) is applied to one end of a first bolometer element 11A connected to the aforementioned first switch 17A.

The pre-charge means 18A as a pre-charge circuit applies the aforementioned pre-charge voltage (VCHG) to one end of the first bolometer element 11A connected to the aforementioned first switch 17A in the off-state, that is, a signal line 21A. The supply of the pre-charge voltage (VCHG) is performed in a period in which the second switch 17B is turned on, and the aforementioned bias voltage (BIAS) is applied to one end of the second bolometer element 11B connected to the aforementioned second switch 17B.

As a means (bias means) 17 for applying the aforementioned bias voltage, the aforementioned bias circuit according to another aspect of the present invention includes first to m-th switches (m is an integer greater than or equal to 2) that are set to an on-state cyclically, successively, and one by one. In other words, the aforementioned bias circuit includes m switches (m is an integer greater than or equal to 2). For example, Fig. 11 exemplifies an example where m = 2, and Fig. 2 exemplifies an example where m = 4.

the aforementioned pre-charge means may have a configuration in which the pre-charge voltage is applied to one end of a bolometer element connected to an (i+1)-th switch in an off-state, in a period in which an i-the switch is turned on, and the bias voltage is applied to one end of a bolometer element connected to the i-th switch. Note that i is an integer where $1 \leq i \leq m$. With regard to the (i+1)-th switch in the off-state, it is assumed that (m+1)-th is read as first when i is equal to m. It is also assumed that the (i+1)-th switch currently turned off is set to the on-state subsequent to the i-th switch.

When applying the pre-charge voltage to one end of the aforementioned bolometer element 11, an aspect of the present invention may set the other end of the aforementioned bolometer element 11 to an open state so that no current flows through the aforementioned bolometer element 11, the one end of which is applied to the pre-charge voltage.

The aforementioned pre-charge voltage (VCHG) according to several aspects of the present invention may be set to voltage equal to the aforementioned bias voltage (BIAS), or voltage obtained by adding or subtracting predetermined voltage (bias-compensating voltage) to or from the aforementioned bias voltage (BIAS).

The aforementioned integration circuit 14 according to several aspects of the present invention is reset for a predetermined period from a start of a period in which the aforementioned bias voltage (BIAS) is applied to the aforementioned bolometer element 11. Specifically, the integration circuit 14 discharges an integrating capacitor for a predetermined period from a start of a period in which the aforementioned bias voltage (BIAS) is applied to the aforementioned bolometer element 11. After the aforementioned reset is completed, the aforementioned integration circuit 14 integrates difference current between current from the aforementioned bias-cancelling circuit 13 and current flowing through the aforementioned bolometer element 11 when the element is biased by the aforementioned bias voltage.

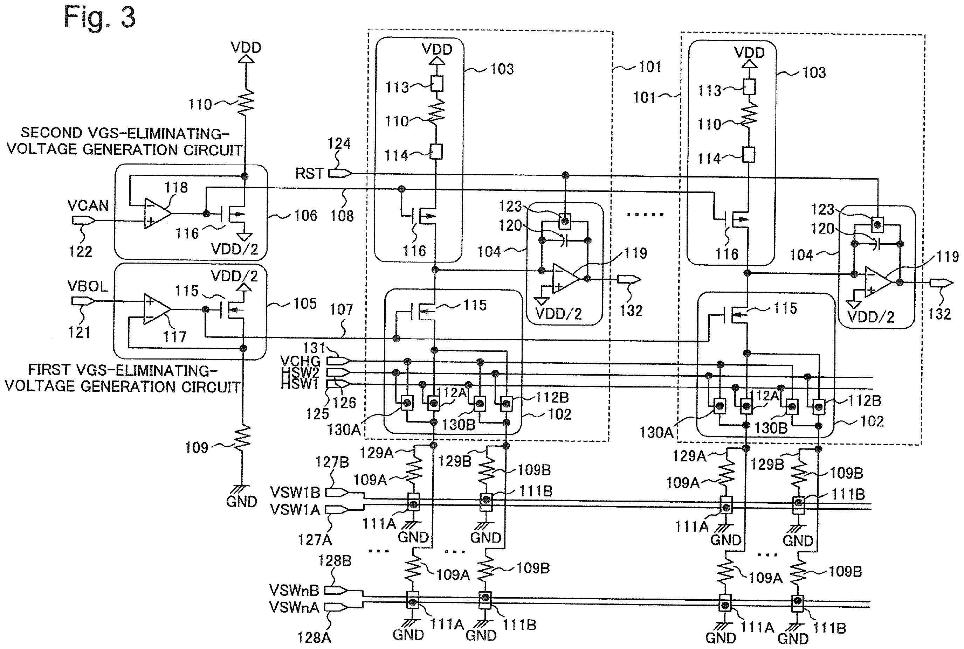

Several aspects of the present invention may have a configuration in which, with respect to each bolometer element 109A connected to one read circuit 101, a pixel switch 111A is provided between the bolometer element 109A and the reference potential GND (refer to Fig. 3). The arrangement of the pixel switch 111A is performed for each of n lines. At that time, pixel switches 111A on an i-th ($1 \leq i \leq n$) line are respectively connected to an input terminal to which a first scanning signal VSWiA is supplied.

Further, in the configuration, with respect to each bolometer element 109B connected to one read circuit 101, a pixel switch 111B may be provided between the bolometer element 109B and the reference potential GND (refer to Fig. 3). The arrangement of the pixel switch 111B is performed for each of the n lines. At that time, pixel switches 111B on an i-th ($1 \leq i \leq n$) line are respectively connected to an input terminal to which a first scanning signal VSWiB is supplied. Then, the configuration is provided with $2 \times n$ scanning signals (VSW1A and B to VSWnA and B) with respect to the aforementioned n lines.

In the configuration, m (m is an integer where m>2) pixel switches may be provided between m bolometer elements connected, in common, to one read circuit 101, and the reference potential GND, and $m \times n$ scanning signals are provided with respect to the aforementioned n lines. The arrangement of the m pixel switches is performed for each of the n lines.

By applying pre-charge voltage to a bolometer element in advance, the exemplary embodiments of the present invention shorten a convergence time of terminal voltage of a selected bolometer element to bias voltage. The exemplary embodiments of the present invention set the pre-charge voltage to a bolometer element in at least a partial period (for example, immediately before the bolometer element is selected and the bias voltage is applied to one end of the bolometer element) of an unselected period of the bolometer element.

When the bolometer element is selected in a state that the bolometer element is set to the pre-charge voltage, a time taken by one end of the bolometer element to converge to the bias voltage from the pre-charge voltage is especially shortened. The shortening of time is based on a comparison with, for example, a time taken by one end of a bolometer element to converge to the bias voltage from the reference potential GND, without pre-charging in an unselected period of the bolometer element.

Accordingly, the reset period of the integration circuit can be shortened. The integral period in the integration circuit can be correspondingly lengthened. That is, the integral period can be lengthened to lower the frequency band of the integration circuit. An effect that, by lowering the band of the integration circuit, an input noise component can be reduced, and therefore temperature resolution of an infrared imaging device can be enhanced (improved), is provided.

The present invention will be described in accordance with the exemplary embodiments below, on the basis of the aforementioned basic concept. It should be apparent from the description below that each and every exemplary embodiment provides the aforementioned effect according to the present invention, other effects, and the like.

<First Exemplary Embodiment>

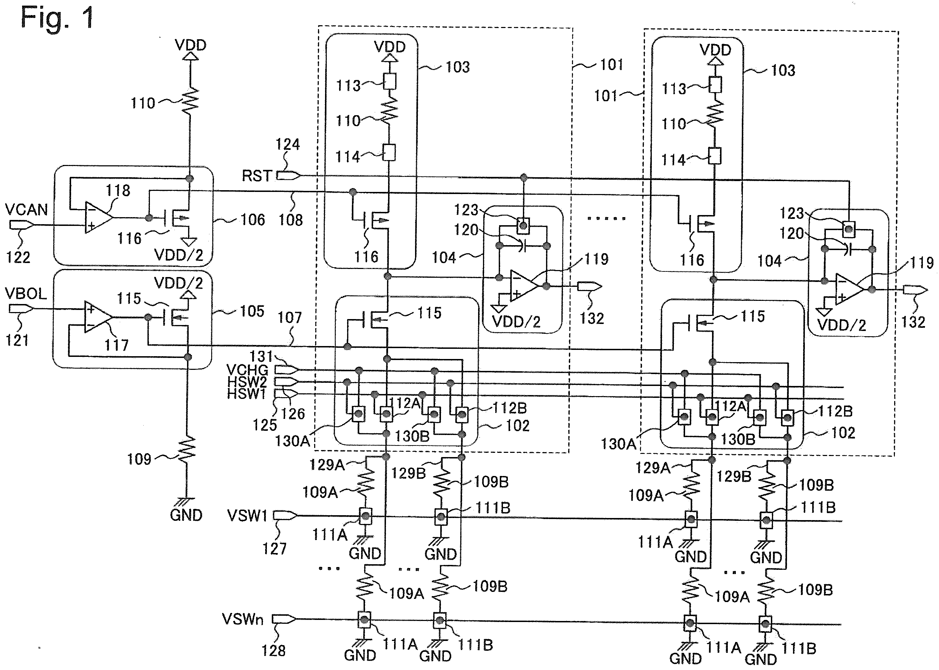

Fig. 1 is a diagram illustrating a configuration according to a first exemplary embodiment of the present invention. While not particularly limited, similarly to Fig. 7, Fig. 1 exemplifies a configuration including a two-dimensional sensor array and a read circuit. Denoting a number of read circuits 101 by M, the two-dimensional sensor array is composed of an n-row $\times$ 2M matrix. Scanning signals VSW1 to VSWn are supplied by an unillustrated vertical shift register (for example, refer to the vertical shift register 205 in Fig. 9).

The read circuit 101 reading current flowing through a bolometer element includes a bias circuit 102, a bias-cancelling circuit 103, and an integration circuit 104. The bias circuit 102 in the read circuit 101 applies a bias to bolometer elements 109A and 109B. The bias-cancelling circuit 103 in the read circuit 101 eliminates offset current of a component other than a signal of a subject. The integration circuit 104 in the read circuit 101 integrates a signal of the subject, and outputs the integrated signal from an output terminal 132 as an output signal (output voltage) of the read circuit 101.

In Fig. 1, an identical reference sign is given to a component identical or equivalent to a component in Fig. 7. Description of components identical to components in Fig. 7, such as the bias-cancelling circuit 103, the integration circuit 104, a first VGS-eliminating-voltage generation circuit 105, and a second VGS-eliminating-voltage generation circuit 106 is omitted as appropriate in order to avoid overlapping, and a point of difference from the reference example in Fig. 7 will be mainly described.

With reference to Fig. 1, the bias circuit 102 differs from the bias circuit 102' in Fig. 7 in that the bias circuit 102 includes pre-charge circuits 130A and 130B applying pre-charge voltage (VCHG) to the bolometer elements 109A and 109B. As illustrated in Fig. 1, the pre-charge voltage (VCHG) supplied to an input terminal 131 is input, in common, to the pre-charge circuit 130A and 130B. Additionally, selection signals HSW2 and HSW1 supplied to input terminals 125 and 126 are respectively input to the pre-charge circuits 130A and 130B.

The pre-charge circuit 130A is composed of a switch, on-off control of which is performed by the selection signal HSW2 performing on-off control of a horizontal switch 112B. The pre-charge circuit 130A is turned on when the selection signal HSW2 is set to an active state (for example, a High level) and the horizontal switch 112B is turned on. When turned on, the pre-charge circuit 130A applies the pre-charge voltage (VCHG) to a node 129A connected to one end of a horizontal switch 112A (a node connected to one end of a selected bolometer element 109A).

The pre-charge circuit 130B is composed of a switch, on-off control of which is performed by the selection signal HSW1 performing on-off control of the horizontal switch 112A. The pre-charge circuit 130B is turned on when the selection signal HSW1 is set to the active state (for example, a High level) and the horizontal switch 112A is turned on. When turned on, the pre-charge circuit 130B applies the pre-charge voltage (VCHG) to a node 129B connected to one end of the horizontal switch 112B (a node connected to one end of a selected bolometer element 109B).

Similarly to the circuits in Fig. 7, input voltage wirings 107 and 108 are respectively connected to outputs of the first VGS-eliminating-voltage generation circuit 105 and the second VGS-eliminating-voltage generation circuit 106. An input terminal 121 of the first VGS-eliminating-voltage generation circuit 105 is applied to bias voltage (VBOL). An input terminal 122 of the second VGS-eliminating-voltage generation circuit 106 is applied to bias voltage (VCAN).

The pre-charge voltage (VCHG) supplied to the input terminal 131 is supplied, in common, to inputs of the pre-charge circuits 130A and 130B in the bias circuits 102 in a plurality of read circuits 101.

A voltage value of the pre-charge voltage (VCHG) supplied to the input terminal 131 may be common with the bias voltage (VBOL) applied to the input terminal 121 so that the value becomes a voltage value of the node 129A or 129B when the horizontal switch 112A or 112B is turned on.

Alternatively, the value may be set to voltage value in consideration of influence of on-resistance of the horizontal switch 112A and the pre-charge circuit 130A, and the like, in order to shorten a convergence time of the node 129A to the bias voltage applied to the input terminal 121 when the horizontal switch 112A is turned on. Further, the value may be set to voltage value in consideration of influence of on-resistance of the horizontal switch 112B and the pre-charge circuit 130B, and the like, in order to shorten a convergence time of the node 129B to the bias voltage (VBOL) applied to the input terminal 121 when the horizontal switch 112B is turned on. For example, the pre-charge voltage (VCHG) may be set to voltage value obtained by adding voltage to or subtracting voltage from the bias voltage (VBOL) for amounts of, for example, voltage drops due to on-resistance of the horizontal switch 112A or 112B, on-resistance of the pre-charge circuit 130A or 130B, and the like.

Fig. 4 is a diagram illustrating a timing operation according to the first exemplary embodiment. Fig. 4 schematically exemplifies respective voltage waveforms of the scanning signals VSW1 to VSWn, the selection signals HSW1 and HSW2, nodes 129A and 129B, and the reset signal RST, in Fig. 1. The selection signals HSW1 and HSW2 are set to (HSW1, HSW2) = (High, Low) in an initial phase (first phase), and set to (HSW1, HSW2) = (Low, High) in a next phase (second phase). Thus, on-off states of horizontal switches 112A and 112B in a bias circuit 102 are alternately switched for every phase to alternately select bolometer elements 109A and 109B in two columns.

In a period in which the horizontal switch 112A is turned off (second phase), a value of the selection signal HSW1 in the preceding phase is input to the pre-charge circuit 130A. The value of the selection signal HSW1 in the preceding phase is the selection signal HSW2 activated in the second phase. Accordingly, the pre-charge circuit 130A is turned on, and the pre-charge voltage (VCHG) applied to the input terminal 131 is applied to a node 129A connected to one end of the bolometer element 109A. The node 129A connected to one end of the bolometer element 109A is a connecting node of the horizontal switch 112A and the one end of the selected bolometer element 109A.

Similarly, in a period in which the horizontal switch 112B is turned off (first phase), a value of the selection signal HSW2 in the preceding phase (that is, the selection signal HSW1 activated in the first phase) is input to the pre-charge circuit 130B. The value of the selection signal HSW2 in the preceding phase is the selection signal HSW1 activated in the first phase. Accordingly, the pre-charge circuit 130B is turned on, and the pre-charge voltage (VCHG) applied to the input terminal 131 is applied to a node 129B connected to one end of the bolometer element 109B. The node 129B connected to one end of the bolometer element 109B is a connecting node of the horizontal switch 112B and the one end of the selected bolometer element 109B.

When the scanning signal VSW1 selecting the first line is in an active state (High level), pixel switches 111A and 111B on the first line, being connected to an input terminal 127 to which the scanning signal VSW1 is supplied, are both turned on in the first and second phases.

In the first phase, the selection signal HSW1 is set to High, and the selection signal HSW2 is set to Low. The horizontal switch 112A is turned on, and one end of the bolometer element 109A on the first line is connected to the source of the NMOS transistor 115 in the bias circuit 102. The horizontal switch 112A is turned on, and the other end of the bolometer element 109A is connected to the reference potential GND through the pixel switch 111A in an on-state.

Consequently, the node 129A, being a connecting node of the horizontal switch 112A and one end of the bolometer element 109A on the first line, converges to the bias voltage (VBOL). On the other hand, since the selection signal HSW2 is Low, the horizontal switch 112B is turned off. One end of the bolometer element 109B, the other end of which being connected to the horizontal switch 112B, is connected to the reference potential GND through the pixel switch 111B in the on-state. At this time, since the selection signal HSW1 is High, the pre-charge circuit 130B is turned on, and the pre-charge voltage (VCHG) is applied to the node 129B by the pre-charge circuit 130B. Specifically, in the first phase, the node 129B, being a connecting node of the horizontal switch 112B and one end of the bolometer element 109B on the first line, is set to the pre-charge voltage (VCHG).

In the second phase, the scanning signal VSW1 is set to High, the selection signal HSW2 is set to High, and the selection signal HSW1 is set to Low. The horizontal switch 112B is turned on, and one end of the bolometer element 109B on the first line is connected to the source of the NMOS transistor 115. The horizontal switch 112B is tuned on, and the other end of the bolometer element 109B on the first line is connected to the reference potential GND through the pixel switch 111B in the on-state. The horizontal switch 112B is turned on, and the node 129B, being a connecting node of the horizontal switch 112B and one end of the bolometer element 109B on the first line, converges to the bias voltage (VBOL) from the pre-charge voltage in the preceding phase.

On the other hand, in the second phase, the horizontal switch 112A is turned off since the selection signal HSW1 is Low, while the pre-charge circuit 130A is turned on since the selection signal HSW2 is High. Consequently, in the second phase, the pre-charge voltage (VCHG) is applied to the node 129A by the pre-charge circuit 130A.

Operations with regard to a second line and beyond, such as operations upon activation of the scanning signals VSW2, VSW3, ..., VSWn, are similar to the above. Therefore description thereof is omitted.

The pre-charge circuit 130A according to the present exemplary embodiment holds the node 129A, being a connecting node of the horizontal switch 112A and one end of the bolometer element 109A, in a state that the pre-charge voltage (VCHG) is applied, in a period in which the horizontal switch 112A is turned off. Further, the pre-charge circuit 130B holds the node 129B, being a connecting node of the horizontal switch 112B and one end of the bolometer element 109B, in a state that the pre-charge voltage (VCHG) is applied, in a period in which the horizontal switch 112B is turned off.

When the horizontal switch 112A transitions from an off-state to an on-state, little voltage fluctuation is generated at the node 129A, being a connecting node of the horizontal switch 112A and one end of the bolometer element 109A. Similarly, when the horizontal switch 112B transitions from the off-state to the on-state, little voltage fluctuation is generated at the node 129B, being a connecting node of the horizontal switch 112B and one end of the bolometer element 109B. The reason for little voltage fluctuation being generated is transition of the selection signals HSW1 and HSW2 from an inactive state to the active state.

Accordingly, when the horizontal switch 112A or 112B transitions from the off-state to the on-state, the node 129A or 129B immediately converges to the bias voltage (VBOL) from the pre-charge voltage (VCHG). Consequently, a reset period (active period [High-level period] of the reset signal RST) in which current is passed through the both ends of an integrating capacitor 120 in the integration circuit 104, can be shortened, and an integral period can be correspondingly lengthened. Consequently, an S/N ratio of an output signal of the integration circuit 104 can be improved to enhance temperature resolution.

While the configuration according to the aforementioned first exemplary embodiment provides two horizontal switches 112A and 112B (first and second horizontal switches) with respect to one read circuit 101 (bias circuit 102), a number of the horizontal switches with respect to the bias circuit 102 is not limited. Further, while the configuration provides two pre-charge circuits 130A and 130B with respect to one read circuit 101 (bias circuit 102), the configuration is not limited thereto, and may, for example, provide a pre-charge circuit corresponding to each horizontal switch.

<Second Exemplary Embodiment>

Fig. 2 is a diagram illustrating a configuration according to a second exemplary embodiment of the present invention. Fig. 2 schematically exemplifies only a configuration including a two-dimensional sensor array and a bias circuit 102. The configuration provides four horizontal switches 112A to 112D with respect to one bias circuit 102. Unillustrated circuits other than the bias circuit 102 (such as a bias-cancelling circuit 103, an integration circuit 104, a first VGS-eliminating-voltage generation circuit 105, and a second VGS-eliminating-voltage generation circuit 106) according to the second exemplary embodiment are identical to the first exemplary embodiment described with reference to Fig. 1. Accordingly, a point of difference from the first exemplary embodiment will be described below.

On-off control of the horizontal switch 112A (first horizontal switch) is performed by a selection signal HSW1 (first selection switch).

On-off control of the horizontal switch 112B (second horizontal switch) is performed by a selection signal HSW2 (second selection switch).

On-off control of the horizontal switch 112C (third horizontal switch) is performed by a selection signal HSW3 (third selection switch).

On-off control of the horizontal switch 112D (fourth horizontal switch) is performed by a selection signal HSW4 (fourth selection switch).

Pre-charge circuits 130A, 130B, 130C, and 130D are respectively connected to selection signals taking values in phases preceding phases in which the selection signals connected to the horizontal switches 112A, 112B, 112C, and 112D are activated. The selection signals connected to the horizontal switches 112A, 112B, 112C, and 112D are HSW1, HSW2, HSW3, and HSW4, respectively, and the selection signals taking values in the preceding phases are HSW4, HSW1, HSW2, and HSW3, respectively. In other words, on-off control of the pre-charge circuit 130A (first pre-charge circuit) is performed by the selection signal HSW4 (fourth selection switch) in common with the horizontal switch 112D (fourth horizontal switch).

On-off control of the pre-charge circuit 130B (second pre-charge circuit) is performed by the selection signal HSW1 (first selection switch) in common with the horizontal switch 112A (first horizontal switch).

On-off control of the pre-charge circuit 130C (third pre-charge circuit) is performed by the selection signal HSW2 (second selection switch) in common with the horizontal switch 112B (second horizontal switch).

On-off control of the pre-charge circuit 130D (fourth pre-charge circuit) is performed by the selection signal HSW3 (third selection switch) in common with the horizontal switch 112C (third horizontal switch).

In Fig. 2, for simplification of description, on-off control (setting to on in a phase preceding a phase in which a corresponding horizontal switch is selected) of the pre-charge circuits 130A to 130D is performed by signal wiring connection of the selection signals HSWA to HSWD. However, it is a matter of course that the present invention is not limited to such a configuration. For example, it is a matter of course that, by use of an unillustrated logical circuit or the like, the configuration may generate signals performing on-off control of the pre-charge circuits 130A to 130D so as to set the circuits to on in phases preceding phases in which corresponding horizontal switches 112A to 112D are selected.

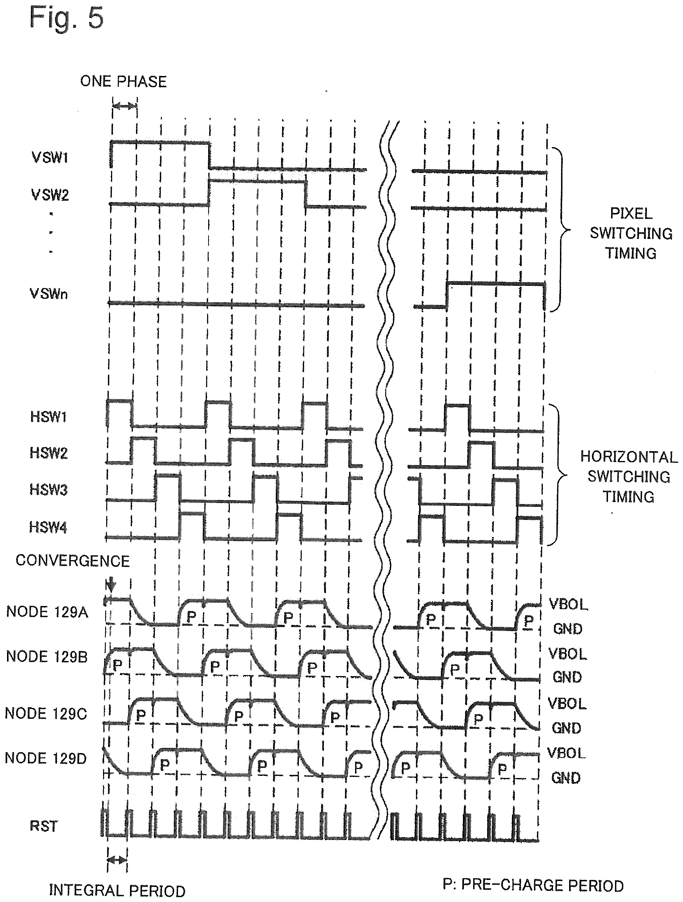

Fig. 5 is a diagram illustrating an operation according to the second exemplary embodiment. Fig. 5 schematically exemplifies respective voltage waveforms of scanning signals VSW1 to VSWn, the selection signals HSW1, HSW2, HSW3, and HSW4, and nodes 129A, 129B, 129C, and 129D, in Fig. 2. The scanning signals VSW1 to VSWn in Fig. 2 perform on-off switching of pixel switches 111A, 111B, 111C, and 111D on each of n lines. The selection signals HSW1, HSW2, HSW3, and HSW4 perform on-off switching of the horizontal switches 112A, 112B, 112C, and 112D.

The scanning signals VSW1 to VSWn from a vertical shift register are successively activated, and, in periods in which the scanning signals VSW1 to VSWn are activated, pixel switches 111A, 111B, 111C, and, 111D on a line corresponding to an activated scanning signal are turned on in common. The vertical shift register represents the vertical shift register 205 in Fig. 9. Activation of the scanning signals VSW1 to VSWn represents setting the signal to, for example, a High level.

In a period in which a scanning signal VSWi is activated, the selection signals HSW1, HSW2, HSW3, and HSW4 are cyclically and successively activated for each phase, and the horizontal switches 112A, 112B, 112C, and 112D in the bias circuit 102 are successively switched on for each phase. The i in the scanning signal VSWi denotes an integer where $1 \leq i \leq n$. The period in which the scanning signal VSWi is activated is represented by one horizontal scanning period (1H). The cyclic and successive activation of the selection signals HSW1, HSW2, HSW3, and HSW4 for each phase represents successively setting the signals to High level for one phase period.

Accordingly, one end of each of bolometer elements 109A, 109B, 109C, and 109D on the i-th line $(1 \leq i \leq n)$ is successively connected to a source of an NMOS transistor 115 for each phase of the first to fourth phases and applied to bias voltage (VBOL). The other ends of the bolometer elements 109A, 109B, 109C, and 109D on the i-th line $(1 \leq i \leq n)$ are respectively connected to a reference potential GND through pixel switches 111A, 111B, 111C, and 111D in an on-state on the i-th line $(1 \leq i \leq n)$.

The pre-charge circuit 130A, having the selection signal HSW4 as an input, is turned on in a phase preceding a phase in which the horizontal switch 112A, on-off control of which being performed by the selection signal HSW1, is turned on, and applies pre-charge voltage (VCHG) to the node 129A. Similarly, the pre-charge circuit 130B, having the selection signal HSW1 as an input, is turned on in a phase preceding a phase in which the horizontal switch 112B, on-off control of which being performed by the selection signal HSW2, is turned on, and applies the pre-charge voltage (VCHG) to the node 129B. Similarly, the pre-charge circuit 130C, having the selection signal HSW2 as an input, is turned on in a phase preceding a phase in which the horizontal switch 112C, on-off control of which being performed by the selection signal HSW3, is turned on, and applies the pre-charge voltage (VCHG) to the node 129C. Similarly, the pre-charge circuit 130D, having the selection signal HSW3 as an input, is turned on in a phase preceding a phase in which the horizontal switch 112D, on-off control of which is performed by the selection signal HSW4, is turned on, and applies the pre-charge voltage (VCHG) to the node 129D. With reference to Fig. 5, details of a timing operation will be described.

In Fig. 5, for example, in a period in which the scanning signal VSW1 selecting the first line is High, the horizontal switch 112A is turned on in a first phase. The first phase represents a period, in Fig. 5, in which the selection signal HSW1 is High, and the selection signals HSW2, HSW3, and HSW4 are Low. Then current flowing through the NMOS transistor 115 through the horizontal switch 112A in an on-state flows to the bolometer element 109A, and the node 129A converges to the bias voltage (VBOL). The period in which the scanning signal VSW1 selecting the first line is High represents a period in which pixel switches 111A, 111B, 111C, and 111D supplied with the scanning signal VSW1 in Fig. 2 is turned on. The first phase represents a period in Fig. 5 in which the selection signal HSW1 is High, and the selection signals HSW2, HSW3, and HSW4 are Low. The current flowing through the NMOS transistor 115 represents drain-to-source current of the NMOS transistor 115.

In the first phase, since the selection signals HSW2, HSW3, and HSW4 are Low, the horizontal switches 112B, 112C, and 112D are all set to an off-state. However, since the selection signal HSW1 is High, the pre-charge circuit 130B is turned on, and the pre-charge voltage (VCHG) is applied to the node 129B by the pre-charge circuit 130B (refer to P: pre-charge period in the voltage waveform of the node 129B in Fig. 5).

In Fig. 5, in a period in which the scanning signal VSW1 selecting the first line is High, the horizontal switch 112B is turned on in a second phase. The second phase represents a period, in Fig. 5, in which the selection signal HSW2 is High, and the selection signals HSW1, HSW3, and HSW4 are Low. Then, current flowing through the NMOS transistor 115 through the horizontal switch 112B in the on-state flows to the bolometer element 109B. Consequently, the node 129B converges to the bias voltage (VBOL) from the pre-charge voltage (VCHG) set in the first phase.

The period in which the scanning signal VSW1 selecting the first line is High represents a period in which pixel switches 111A, 111B, 111C, and 111D supplied with the scanning signal VSW1 in Fig. 2 is turned on. The second phase represents a period, in Fig. 5, in which the selection signal HSW2 is High, and the selection signals HSW1, HSW3, and HSW4 are Low. The current flowing through the NMOS transistor 115 represents the drain-to-source current of the NMOS transistor 115.

In the second phase, since the selection signals HSW1, HSW3, and HSW4 are Low, the horizontal switches 112A, 112C, and 112D are set to the off-state. The horizontal switch 112A and the pre-charge circuit 130A are both set to the off-state. Consequently, the node 129A is discharged, and the potential of the node 129A becomes the GND level at a time constant CR determined by a resistance value and wiring resistance of the bolometer element 109A, parasitic capacitance and wiring capacitance of the bolometer element 109A, and the like. By contrast, the pre-charge circuit 130C is set to an on-state. Consequently, the node 129C is set to the pre-charge voltage (VCHG) from the GND potential in the first phase, by the pre-charge circuit 130C (refer to P in the voltage waveform of the node 129C in Fig. 5). Since the pre-charge circuit 130D is in the off-state, the node 129D is set to the GND potential.

In Fig. 5, in a period in which the scanning signal VSW1 selecting the first line is High, the horizontal switch 112C is turned on in a third phase. The third phase represents a period, in Fig. 5, in which the selection signal HSW3 is High, and the selection signals HSW1, HSW2, and HSW4 are Low. Then, current flowing through the NMOS transistor 115 through the horizontal switch 112C in the on-state flows to the bolometer element 109C. Consequently, the node 129C converges to the bias voltage (VBOL) from the pre-charge voltage (VCHG) set in the second phase.

In the third phase, since the selection signals HSW1, HSW2, and HSW4 are Low, the horizontal switch 112A, 112B, and 112D are set to the off-state. The horizontal switch 112A and the pre-charge circuit 130A are both set to the off-state. Consequently, the node 129A is held at the GND level. Furthermore, the horizontal switch 112B and the pre-charge circuit 130B are both set to the off-state. Consequently, the node 129B is discharged and becomes the GND level. By contrast, the pre-charge circuit 130D is set to the on-state. Consequently, the node 129D is set to the pre-charge voltage (VCHG) from the GND potential in the second phase by the pre-charge circuit 130D (refer to P in the voltage waveform of the node 129D in Fig. 5).

In Fig. 5, in a period in which the scanning signal VSW1 selecting the first line is High, the horizontal switch 112D is turned on in a fourth phase. The fourth phase represents a period, in Fig. 5, in which the selection signal HSW4 is High, and the selection signals HSW1, HSW2, and HSW3 are Low. Then, current flowing through the NMOS transistor 115 through the horizontal switch 112D in the on-state flows to the bolometer element 109D. Consequently, the node 129D converges to the bias voltage (VBOL) from the pre-charge voltage (VCHG) set in the third phase.

In the fourth phase, since the selection signals HSW1, HSW2, and HSW3 are Low, the horizontal switches 112A, 112B, and 112C are set to the off-state. Since the selection signal HSW4 is High, the pre-charge circuit 130A is set to the on-state. Current is supplied by the pre-charge circuit 130A to the bolometer element 109A connected in series to the pixel switch 111A on the first line, being set to the on-state by the scanning signal VSW1 at a High level. Consequently, the node 129A is set to the pre-charge voltage (VCHG) from the GND potential in the third phase (refer to P in the voltage waveform of the node 129A in Fig. 5). The pre-charge circuits 130B, 130C, and 130D are set to the off-state. Since the horizontal switch 112B and the pre-charge circuit 130B are both set to the off-state, the node 129B is held at the GND level. Since the horizontal switch 112C and the pre-charge circuit 130C are both set to the off-state, an electric charge at the node 129C is discharged, and the node is set to the GND level.

In a succeeding period in which the scanning signal VSW2 is High, current flowing through the NMOS transistor 115 through the horizontal switch 112A in the on-state flows to the bolometer element 109A on a second line, in the first phase. Consequently, the node 129A converges to the bias voltage (VBOL) from the pre-charge voltage (VCHG) set in the preceding phase. The period in which the scanning signal VSW2 is High represents a period in which pixel switches 111A, 111B, 111C, and 111D on the second line, being supplied with the scanning signal VSW2 in Fig. 2, are turned on. The first phase represents a period, in Fig. 5, in which the selection signal HSW1 is High, and the selection signals HSW2, HSW3, and HSW4 are Low. The current flowing through the NMOS transistor 115 represents the drain-to-source current of the NMOS transistor 115.

In Fig. 5, the pre-charge voltage (VCHG) is assumed to have a voltage value equal to the bias voltage (VBOL). In phase switching, the voltage of the node 129A slightly drops for a moment upon switching from the pre-charge voltage (VCHG) set in the preceding phase to the bias voltage (VBOL), but immediately switches to the bias voltage (VBOL). The slight voltage drop upon switching is due to on-off switching timings of the pre-charge circuit and the horizontal switch. After the node 129A converges to the bias voltage (VBOL), a difference between current in the bias-cancelling circuit 103 and current flowing through the bolometer element 109A on the second line is integrated in the integration circuit 104. A similar operation is thereafter repeated.

The second exemplary embodiment also provides a similar effect to the first exemplary embodiment. Additionally, a number of columns (number of horizontal switches) with respect to one read circuit is twice the number according to the first exemplary embodiment, thus contributing to reduction of a circuit configuration and power consumption.

<Third Exemplary Embodiment>

Fig. 3 is a diagram illustrating a configuration according to a third exemplary embodiment of the present invention. A difference from the first exemplary embodiment described with reference to Fig. 1 is that two systems of scanning signals VSWi, VSWiA and VSWiB (i is an integer where $1 \leq i \leq n$), for each line are provided, corresponding to pixel switches 111 A and 111B on each line. The number of scanning signal wirings with respect to n lines becomes $2 \times n$ that is twice the number according to the first exemplary embodiment. The remaining configuration is identical to the first exemplary embodiment described with reference to Fig. 1. An operation unique to the third exemplary embodiment (a configuration including twice the number of scanning signals according to the first exemplary embodiment) will be described below, as a point of difference from the first exemplary embodiment.

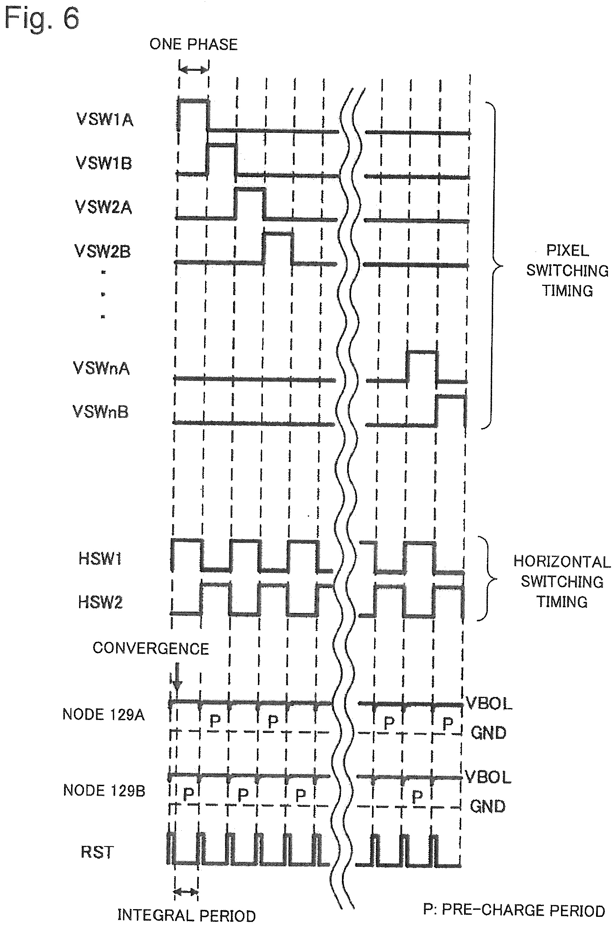

Fig. 6 is a diagram illustrating an operation according to the third exemplary embodiment. Fig. 6 schematically exemplifies voltage waveforms of scanning signals VSW1A, VSW1B, ..., VSWnA, and VSWnB, selection signals HSW1 and HSW2, nodes 129A and 129B, and a reset signal RST, in Fig. 3.

Scanning signals VSWiA and VSWiB ($1 \leq i \leq n$), selecting an i-th line out of n lines, are set to an active state (for example, a High level) in first and second phases. Pixel switches 111A and 111B on the i-th line ($1 \leq i \leq n$) are respectively turned on when the scanning signals VSWiA and VSWiB are in the active state. In other words, the pixel switches 111A and 111B are respectively turned on in the first and second phases.

In the example in Fig. 3, an input terminal 127A is connected to a pixel switch 111A arranged close to a horizontal switch 112A. The scanning signal VSW1A scanning a first line is supplied to the input terminal 127A to perform on-off control of the pixel switch 111A. An input terminal 127B is connected to a pixel switch 111B arranged close to a horizontal switch 112B. The scanning signal VSW1B scanning the first line is supplied to the input terminal 127B to perform on-off control of the pixel switch 111B.

In the example in Fig. 3, an input terminal 128A is connected to a pixel switch 111A arranged farthest from the horizontal switch 112A. The scanning signal VSWnA scanning an n-th line is supplied to the input terminal 128A to perform on-off control of the pixel switch 111A. An input terminal 128B is connected to a pixel switch 111B arranged farthest from the horizontal switch 112B. The scanning signal VSWnB scanning the n-th line is supplied to the input terminal 128B to perform on-off control of the pixel switch 111B.

The selection signals HSW1 and HSW2 are alternately activated for each phase. The horizontal switches 112A and 112B are alternately turned on and off for each phase, corresponding to the selection signals HSW1 and HSW2 alternately activated for each phase, to select bolometer elements 109A and 109B.

In a horizontal scanning period in which the first line is selected, the pixel switches 111A and 111B on the first line, being selected by the scanning signals VSW1A and VSW1B selecting the first line, are respectively turned on in the first and second phases.

When the scanning signal VSW1A is in the active state (High), the scanning signal VSW1B is in an inactive state (Low), the selection signal HSW1 is in an active state (High), and the selection signal HSW2 is in an inactive state (Low), the pixel switch 111A on the first line is turned on, and the horizontal switch 112A is turned on. Accordingly, one end of the bolometer element 109A on the first line is connected to a source of an NMOS transistor 115, and the other end of the bolometer element 109A on the first line is connected to a reference potential GND. Consequently, current flowing through the NMOS transistor 115 flows to the bolometer element 109A on the first line, and the node 129A connected to the one end of the bolometer element 109A on the first line converges to bias voltage (VBOL). The current flowing through the NMOS transistor 115 represents drain-to-source current of the NMOS transistor 115.

On the other hand, the horizontal switch 112B is turned off since the selection signal HSW2 is in the inactive state (Low), while a pre-charge circuit 130B is turned on since the selection signal HSW1 is in the active state (High). Accordingly, pre-charge voltage (VCHG) is applied to the node 129B by the pre-charge circuit 130B. At this time, since the scanning signal VSW1B is in the inactive state (Low), the pixel switch 111B on the first line is turned off, and one end of the bolometer element 109B on the first line, the other end of which being applied to the pre-charge voltage, is set to an open state. Consequently, no current flows through the bolometer element 109B on the first line. In this state, the node 129B becomes equipotential to an input terminal 131 applied to the pre-charge voltage (VCHG).

When the scanning signal VSW1B is in the active state (High), the scanning signal VSW1A is in the inactive state (Low), the selection signal HSW2 is in the active state (High), and the selection signal HSW1 is in the inactive state (Low), the pixel switch 111B on the first line is turned on, and the horizontal switch 112B is turned on. Accordingly, one end of the bolometer element 109B on the first line is connected to the source of the NMOS transistor 115, and the other end of the bolometer element 109B on the first line is connected to the reference potential GND. Consequently, current flowing through the NMOS transistor 115 flows to the bolometer element 109B on the first line, and the node 129B connected to the one end of the bolometer element 109B on the first line converges to the bias voltage (VBOL) from the pre-charge voltage in the preceding phase. The current flowing through the NMOS transistor 115 represents the drain-to-source current of the NMOS transistor 115.

On the other hand, the horizontal switch 112A is turned off since the selection signal HSW1 is in the inactive state (Low), while the pre-charge circuit 130A is turned on since the selection signal HSW2 is in the active state (High). Accordingly, the pre-charge voltage (VCHG) is applied to the node 129A by the pre-charge circuit 130A. At this time, since the scanning signal VSW1A is in the inactive state (Low), the pixel switch 111A on the first line is turned off, and one end of the bolometer element 109A on the first line, the other end of which being applied to the pre-charge voltage (VCHG), is set to an open state. Consequently, no current flows through the bolometer element 109A on the first line. In this state, the node 129A becomes equipotential to the input terminal 131 applied to the pre-charge voltage (VCHG).

Operations with regard to a second line and beyond, such as an operation upon activation of the scanning signals VSW2A and 2B, are similar to the above.

According to the aforementioned first exemplary embodiment, when either one of the pre-charge circuits 130A and 130B is turned on, pixel switches 111A and 111B on a selected line are both turned on. Then, current flows to the reference potential GND from the input terminal 131 applied to the pre-charge voltage (VCHG), through the pre-charge circuit in an on-state, the bolometer element, and the pixel switch in an on-state.

By contrast, according to the present exemplary embodiment, when the selection signal HSW1 is set to the inactive state (Low), the selection signal HSW2 is set to the active state (High), and the pre-charge circuit 130A is turned on, a pixel switch 111 A on a selected i-th line (1 ≤ i ≤ n) is turned off. In other words, the scanning signal VSWiA is Low. Accordingly, no current flows to the reference potential GND from the input terminal 131 applied to the pre-charge voltage (VCHG), through the pre-charge circuit 130A in the on-state, and the bolometer element 109B.

When the selection signal HSW1 is set to the active state (High), the selection signal HSW2 is set to the inactive state (Low), and the pre-charge circuit 130B is turned on, a pixel switch 111B on the selected i-th line (1 ≤ i ≤ n) is turned off. In other words, the scanning signal VSWiB is Low. Accordingly, no current flows to the reference potential GND from the input terminal 131 applied to the pre-charge voltage (VCHG), through the pre-charge circuit 130B in the on-state and the bolometer element 109B.

Thus, the third exemplary embodiment provides a similar effect to the aforementioned first exemplary embodiment, and additionally suppresses increase of power consumption when the pre-charge voltage is supplied, compared with the first exemplary embodiment. However, the number of scanning signals increases to twice the number according to the aforementioned first exemplary embodiment.

While the aforementioned exemplary embodiments have been described in accordance with the example providing a two-dimensional array (matrix) as a sensor array, it is a matter of course that a one-dimensional array (without a scanning signal and a pixel switch) provided with a bolometer element for one line may be similarly applicable.

Further, while the aforementioned exemplary embodiments have been described in accordance with the example employing PMOS in the bias-cancelling circuit 103 and NMOS in the bias circuit 102, it is a matter of course that the configuration is not limited thereto.

The respective disclosures of the aforementioned PTLs are incorporated herein by reference thereto. The exemplary embodiments and the examples may be changed and adjusted within the scope of the entire disclosure (including the claims) of the present invention and on the basis of the basic technological concept thereof. Further, within the scope of the claims of the present invention, various disclosed elements (including the respective elements of the claims, the respective elements of the examples, and the respective elements of the drawings) may be combined and selected in a variety of ways. That is, it is a matter of course that the present invention includes various modifications and changes that may be made by a person skilled in the art on the basis of the entire disclosure including the claims, and the technological concept.

The present invention has been described with the aforementioned exemplary embodiments as exemplary examples. However, the present invention is not limited to the aforementioned exemplary embodiments. In other words, various embodiments that can be understood by a person skilled in the art may be applied to the present invention, within the scope thereof.

This application is based upon and claims the benefit of priority from Japanese patent application No. 2014-88506, filed on April 22, 2014, the disclosure of which is incorporated herein in its entirety by reference.

[Reference Signs List]

[O164]

| 10, 101, 101' | Read circuit |
| 11, 11 A, 11B, 109A, 109B, 109C, 109D | Bolometer element |
| 12, 102, 102' | Bias circuit |
| 13, 103 | Bias-cancelling circuit |

| | |
|---|---|
| 14, 104 | Integration circuit |
| 15 | Input terminal |
| 16 | Input terminal |
| 17 | Means for applying bias voltage (bias means) |
| 17A | First switch |
| 17B | Second switch |
| 18, 18A, 18B | Pre-charge means |
| 19, 125 | Input terminal |
| 20, 126 | Input terminal |
| 21, 21 A, 21B | Signal line |
| 22 | Output terminal |
| 105 | First VGS-eliminating-voltage generation circuit |
| 106 | Second VGS-eliminating-voltage generation circuit |
| 107, 108 | Input voltage wiring |
| 110 | Resistance element |
| 111A, 111B, 111C, 111D | Pixel switch |
| 112A, 112B, 112C, 112D | Horizontal switch |
| 113 | Pixel switch |
| 114 | Horizontal switch |
| 115 | NMOS transistor |
| 116 | PMOS transistor |
| 117, 118, 119 | Operational amplifier |
| 120 | Integration capacitor |
| 123 | Switch |
| 124 | Input terminal |
| 127, 127A, 127B | Input terminal |
| 128, 128A, 128B | Input terminal |
| 129A, 129B, 129C, 129D | Node |
| 130A, 130B, 130C, 130D | Pre-charge circuit (pre-charge means) |
| 131 | Input terminal |
| 132 | Output terminal |
| 201 | Pixel switch |
| 202 | Bolometer element (thermoelectric transducer) |
| 203 | Signal line |
| 204 | Horizontal switch |
| 205 | Vertical shift register |
| 206 | Read circuit |
| 207 | Multiplexer switch |
| 208 | Horizontal shift register |
| 209 | Output buffer |
| 211 | Scanning line |

**Claims**

1. A semiconductor device comprising:

   at least one bolometer element; and
   a bias circuit including means for applying bias voltage to the bolometer element, and inputting difference current between current flowing through the bolometer element when the bias voltage is applied to the bolometer element, and current from a bias-cancelling circuit eliminating offset current of the bolometer element, to an integration circuit, wherein
   the bias circuit further includes pre-charge means for pre-charging the bolometer element with predetermined pre-charge voltage.

2. The semiconductor device according to claim 1, wherein
   the pre-charge means pre-charges the bolometer element with the pre-charge voltage in a partial period or an entire period of a period in which the bolometer element is not biased by the bias voltage.

**3.** The semiconductor device according to claim 1 or 2, wherein
the pre-charge means pre-charges the bolometer element with the pre-charge voltage in at least a partial period of a period in which the bolometer element is not biased by the bias voltage, including a period immediately before the bolometer element is biased by the bias voltage.

**4.** The semiconductor device according to any one of claims 1 to 3,
wherein
the bias circuit includes first and second switches, being alternately turned on for every predetermined period and supplying the bias voltage when being in an on-state, as means for applying the bias voltage, and
the pre-charge means,
in a period in which the first switch is turned on and the bias voltage is applied to one end of a first bolometer element connected to the first switch,
applies the pre-charge voltage to one end of a second bolometer element connected to the second switch in an off-state, and,
in a period in which the second switch is turned on and the bias voltage is applied to one end of the second bolometer element connected to the second switch,
applies the pre-charge voltage to one end of the first bolometer element connected to the first switch in an off-state.

**5.** The semiconductor device according to any one of claims 1 to 4,
wherein
the bias circuit includes first to m-th switches (m is a predetermined integer greater than or equal to 2) set to an on-state cyclically, successively, and one by one, as means for applying the bias voltage, and
the pre-charge means,
in a period in which an i-th switch (i is an integer where $1 \le i \le m$) is turned on, and the bias voltage is applied to one end of a bolometer element connected to the i-th switch ($1 \le i \le m$),
applies the pre-charge voltage to one end of a bolometer element connected to an (i+1)-th switch (when i is equal to m, [m+1]-th is read as first) in an off-state.

**6.** The semiconductor device according to any one of claims 1 to 5,
wherein,
when the pre-charge means applies pre-charge voltage to one end of the bolometer element, the other end of the bolometer element is set to an open state.

**7.** The semiconductor device according to any one of claims 1 to 6,
wherein the pre-charge voltage is equal to the bias voltage or voltage obtained by adding or subtracting predetermined voltage to or from the bias voltage.

**8.** The semiconductor device according to any one of claims 1 to 7,
wherein
the integration circuit is reset for a predetermined period from a start of a period in which the bias voltage is applied to the bolometer element, and, after the reset is completed, the integration circuit integrates difference current between current from the bias-cancelling circuit and current flowing through the bolometer element when the bias voltage is applied to the bolometer element.

**9.** The semiconductor device according to any one of claims 1 to 8, further comprising:

one or more read circuits each including the bias circuit, the bias-cancelling circuit, and the integration circuit;
as the bolometer elements,
first to m-th bolometer elements (m is an integer greater than or equal to 2) with respect to one of the read circuits for each line; and
with respect to one of the read circuits,
an array of m × n bolometer elements including n of the lines (n is a predetermined integer greater than or equal to 1).

**10.** The semiconductor device according to claim 9, further comprising,
for each of the n lines, first to m-th pixel switches between the first to m-th bolometer elements corresponding to one of the read circuits, and a reference potential, wherein
the pixel switches on each line of the n lines are turned on and off, in common, by each scanning signal of n scanning signals.

11. The semiconductor device according to claim 9, further comprising, for each of the n lines, first to m-th pixel switches between the first to m-th bolometer elements corresponding to one of the read circuits, and a reference potential, wherein,
with respect to one of the read circuits,
first to m-th pixel switches on one line are respectively connected to first to m-th scanning signals, and
with respect to the n lines, m $\times$ n scanning signals are provided.

12. The semiconductor device according to Claim 5, wherein
the first to m-th switches are composed of horizontal switches set to on for each phase.

13. An infrared imaging device comprising the semiconductor device according to any one of claims 1 to 12.

14. A method for controlling a semiconductor device, comprising:

inputting difference current between current flowing through a bolometer element when bias voltage is applied to the bolometer element from a bias circuit, and current from a bias-cancelling circuit eliminating offset current of the bolometer element, to an integration circuit, and outputting an integrated value of the difference current; and
pre-charging the bolometer element with predetermined pre-charge voltage.

15. The method for controlling a semiconductor device, according to claim 14, further comprising
pre-charging the bolometer element with the pre-charge voltage in a partial period or an entire period of a period in which the bolometer element is not biased by the bias voltage.

16. The method for controlling a semiconductor device, according to claim 14 or 15, further comprising
pre-charging the bolometer element with the pre-charge voltage in at least a partial period of a period in which the bolometer element is not biased by the bias voltage, including a period immediately before the bolometer element is biased by the bias voltage.

17. The method for controlling a semiconductor device, according to any one of claims 14 to 16, further comprising:

in a period in which a first switch is turned on, and the bias voltage is applied to one end of a first bolometer element connected to the first switch,
applying the pre-charge voltage to one end of a second bolometer element connected to a second switch in an off-state; and
in a period in which the second switch is turned on, and the bias voltage is applied to one end of the second bolometer element connected to the second switch,
applying the pre-charge voltage to one end of the first bolometer element connected to the first switch in an off-state.

18. The method for controlling a semiconductor device, according to any one of claims 14 to 16, further comprising,
in a period in which an i-th switch ($1 \leq i \leq m$), out of first to m-th switches (m is a predetermined integer greater than or equal to 2) set to an on-state successively, cyclically, and one by one, is turned on, and the bias voltage is applied to one end of a bolometer element connected to the i-th switch ($1 \leq i \leq m$),
applying the pre-charge voltage to one end of a bolometer element connected to an (i+1)-th switch (when i is equal to m, [m+1]-th is read as first) in an off-state.

19. The method for controlling a semiconductor device, according to any one of claims 14 to 18, further comprising,
when pre-charge voltage is applied to one end of the bolometer element, setting the other end of the bolometer element to an open state.

20. The method for controlling a semiconductor device, according to any one of claims 14 to 19, wherein
the pre-charge voltage is equal to the bias voltage or voltage obtained by adding predetermined voltage to the bias voltage.

21. The method for controlling a semiconductor device, according to any one of claims 14 to 20, further comprising
resetting the integration circuit for a predetermined period from a start of a period in which the bias voltage is applied to the bolometer element, wherein,

after the reset is completed, the integration circuit integrates difference current between current from the bias-cancelling circuit, and current flowing through the bolometer element when the bias voltage is applied to the bolometer element.

Fig. 1

Fig. 2

Fig. 3

## Fig. 4

## Fig. 5

Fig. 6

# Fig. 7

EP 3 139 140 A1

Fig. 8

ONE PHASE

VSW1

VSW2

VSWn

PIXEL
SWITCHING
TIMING

HSW1

HSW2

HORIZONTAL
SWITCHING
TIMING

CONVERGENCE

NODE 129A

VBOL
GND

NODE 129B

VBOL
GND

RST

INTEGRAL PERIOD

# Fig. 9

EP 3 139 140 A1

# Fig. 10

POWER
SOURCE 1

BIAS-CANCELLING
CIRCUIT ⟋ 13

INTEGRATION
CIRCUIT ⟋ 14

⟋ 22

12

BIAS
VOLTAGE ⟋ 15

BIAS MEANS ⟋ 17

PRE-CHARGE
VOLTAGE ⟋ 16

PRE-CHARGE
MEANS ⟋ 18

BIAS CIRCUIT

21 SIGNAL LINE

11 BOLOMETER ELEMENT

POWER
SOURCE 2

# Fig. 11

# EP 3 139 140 A1

## INTERNATIONAL SEARCH REPORT

| | International application No. |
|---|---|
| | PCT/JP2015/002080 |

**A. CLASSIFICATION OF SUBJECT MATTER**
*G01J1/42(2006.01)i, H04N5/33(2006.01)i*

According to International Patent Classification (IPC) or to both national classification and IPC

**B. FIELDS SEARCHED**

Minimum documentation searched (classification system followed by classification symbols)
G01J1/00-1/60, G01J5/00-5/62, H04N5/33

Documentation searched other than minimum documentation to the extent that such documents are included in the fields searched
Jitsuyo Shinan Koho          1922-1996   Jitsuyo Shinan Toroku Koho   1996-2015
Kokai Jitsuyo Shinan Koho    1971-2015   Toroku Jitsuyo Shinan Koho   1994-2015

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2010-283514 A (Renesas Electronics Corp.), 16 December 2010 (16.12.2010), | 1-5,7,9-18, 20 |
| Y | paragraphs [0026] to [0047]; fig. 1 to 4 (Family: none) | 8,21 |
| Y | JP 10-148570 A (NEC Corp.), 02 June 1998 (02.06.1998), paragraphs [0017] to [0021], [0031] to [0032]; fig. 1, 4, 5 (Family: none) | 8,21 |
| A | JP 2008-22457 A (NEC Electronics Corp.), 31 January 2008 (31.01.2008), entire text; all drawings & US 2008/0048763 A1      & US 2010/0102231 A1 | 1-21 |

☒ Further documents are listed in the continuation of Box C.   ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 03 July 2015 (03.07.15) | 21 July 2015 (21.07.15) |

| Name and mailing address of the ISA/ | Authorized officer |
|---|---|
| Japan Patent Office 3-4-3,Kasumigaseki,Chiyoda-ku, Tokyo 100-8915,Japan | |
| | Telephone No. |

Form PCT/ISA/210 (second sheet) (July 2009)

32

**INTERNATIONAL SEARCH REPORT**

International application No.

PCT/JP2015/002080

C (Continuation). DOCUMENTS CONSIDERED TO BE RELEVANT

| Category* | Citation of document, with indication, where appropriate, of the relevant passages | Relevant to claim No. |
|---|---|---|
| A | JP 2004-532977 A (Honeywell International Inc.), 28 October 2004 (28.10.2004), entire text; all drawings & US 2002/0125430 A1 & WO 2002/071015 A1 & EP 1366344 A & DE 60227054 D & AT 398280 T | 1-21 |
| A | WO 2013/038911 A1 (NEC Corp.), 21 March 2013 (21.03.2013), entire text; all drawings & US 2014/0367573 A1 & EP 2757355 A1 | 1-21 |

Form PCT/ISA/210 (continuation of second sheet) (July 2009)

**REFERENCES CITED IN THE DESCRIPTION**

**Patent documents cited in the description**

- JP 2003318712 A
- JP 2008022457 A

- JP 2014088506 A